# EUROPÄISCHE PATENTSCHRIFT

(11) **EP 3 278 165 B1**
(45) Veröffentlichungstag und Bekanntmachung des Hinweises auf die Patenterteilung: **07.06.2023**
(21) Anmeldenummer: 16713442.8
(22) Anmeldetag: 31.03.2016
(51) Int. Cl.: G01N 21/64, G02B 21/00, G02B 27/58

(54) **VERFAHREN UND RASTERFLUORESZENZLICHTMIKROSKOP ZUM MEHRDIMENSIONAL HOCHAUFLÖSENDEN ABBILDEN EINER STRUKTUR ODER EINES WEGS EINES PARTIKELS IN EINER PROBE**
METHOD AND SCANNING FLUORESCENCE MICROSCOPE FOR MULTIDIMENSIONAL HIGH-RESOLUTION IMAGING OF A STRUCTURE OR A PATH OF A PARTICLE IN A SAMPLE
PROCÉDÉ ET MICROSCOPE À LUMIÈRE FLUORESCENTE À BALAYAGE POUR L'IMAGERIE MULTIDIMENSIONNELLE À HAUTE RÉSOLUTION D'UNE STRUCTURE OU D'UN CHEMIN D'UNE PARTICULE DANS UN ÉCHANTILLON

(30) Priorität: 31.03.2015 DE 102015105018
(43) Veröffentlichungstag der Anmeldung: 07.02.2018
(73) Patentinhaber: Institut für Nanophotonik Göttingen e.V., 37077 Göttingen (DE)
(72) Erfinder: EGNER, Alexander, 37574 Einbeck (DE); GEISLER, Claudia, 37581 Bad Gandersheim (DE); KRÜGER, Jennifer-Rose, 48163 Münster (DE)
(74) Vertreter: REHBERG HÜPPE + PARTNER
(86) Internationale Anmeldenummer: PCT/EP2016/057154
(87) Internationale Veröffentlichungsnummer: WO 2016/156541

(56) Entgegenhaltungen:
- EP-A1- 1 862 839
- EP-A1- 2 444 832
- WO-A1-2009/085218
- WO-A2-2010/014244
- DE-A1-102006 009 831
- US-A1- 2012 104 279
- US-A1- 2012 250 000
- US-A1- 2014 346 328
- THOMAS KLAR ET AL: "Breaking Abbe's diffraction resolution limit in fluorescence microscopy with stimulated emission depletion beams of various shapes", PHYSICAL REVIEW E, Bd. 64, Nr. 6, 1. November 2001 (2001-11-01), XP055149722, ISSN: 1063-651X, DOI: 10.1103/PhysRevE.64.066613

## Beschreibung

### TECHNISCHES GEBIET DER ERFINDUNG

Die Erfindung bezieht sich auf ein Verfahren zum mehrdimensional hochauflösenden Abbilden einer mit Fluoreszenzmarkern markierten Struktur einer Probe, das das Beaufschlagen eines Messbereichs mit Fluoreszenzermöglichungslicht, das anschließende Beaufschlagen eines Teilbereichs des Messbereichs mit Fluoreszenzverhinderungslicht und das Messen von aus dem Messbereich emittierten Fluoreszenzlicht umfasst. Die Erfindung bezieht sich weiterhin auf ein Verfahren zum mehrdimensional hochauflösenden Abbilden eines Wegs eines mit einem Fluoreszenzmarker markierten Partikels in einer Probe, bei dem die vorgenannten Schritte des Beaufschlagens und Messens ebenfalls durchgeführt werden. Darüber hinaus bezieht sich die vorliegende Erfindung auf Rasterfluoreszenzlichtmikroskope zur Durchführung dieser Verfahren.

Das Fluoreszenzermöglichungslicht kann wie jedes andere Licht nicht stärker in der Probe lokalisiert werden, als bis zur Abbeschen Beugungsgrenze bei seiner Wellenlänge, die auch unter optimalen optischen Voraussetzungen bei der halben Wellenlänge liegt. Für das aus der Probe emittierte Fluoreszenzlicht gilt die Abbesche Beugungsgrenze bei dessen Wellenlänge für die Zuordnung zu einem bestimmten Bereich der Probe. Entsprechend kann der Messbereich beim Beaufschlagen mit dem Fluoreszenzermöglichungslicht und beim Messen des Fluoreszenzlichts nicht unter die Beugungsgrenze bei der Wellenlänge des Fluoreszenzermöglichungslichts bzw. des Fluoreszenzlichts verkleinert werden. Mit Hilfe des Fluoreszenzverhinderungslichts kann die räumliche Auflösung beim Abbilden einer Struktur oder beim Tracking eines Partikels in der Probe die Abbesche Beugungsgrenze jedoch unterschreiten. Wenn der Teilbereich des Messbereichs, der mit dem Fluoreszenzverhinderungslicht beaufschlagt wird, den ganzen Messbereich bis auf eine Nullstelle einer Intensitätsverteilung des Fluoreszenzverhinderungslichts abdeckt, kann das gemessene Fluoreszenzlicht nur noch aus dieser Nullstelle stammen und damit deren Lage in der Probe zugeordnet werden. Die Abmessung einer Nullstelle des Fluoreszenzverhinderungslichts, in der die Intensität des Fluoreszenzverhinderungslichts null oder jedenfalls so klein ist, dass das Fluoreszenzverhinderungslicht die Emission von Fluoreszenzlicht nicht verhindert, während die Intensität des Fluoreszenzverhinderungslichts außerhalb dieser Nullstelle so groß ist, dass es die Emission von Fluoreszenzlicht von den Fluoreszenzmarkern vollständig verhindert, kann mit steigender Lichtleistung des Fluoreszenzverhinderungslichts weit unter die Beugungsgrenze bei der Wellenlänge des Fluoreszenzverhinderungslichts und damit auch bei den Wellenlängen des Fluoreszenzermöglichungslichts und des Fluoreszenzlichts reduziert werden. Im Ergebnis wird beim Abbilden der interessierenden Struktur oder beim Tracking des interessierenden Partikels in der Probe eine Ortsauflösung erreicht, die um einen Faktor von mindestens 5, 10 oder mehr besser sein kann als bei herkömmlicher konfokaler Rasterfluoreszenzlichtmikroskopie.

Das Fluoreszenzverhinderungslicht kann die Emission von Fluoreszenzlicht durch die Fluoreszenzmarker auf unterschiedliche Weise verhindern. Bei der Stimulated Emission Depletion (STED)-Fluoreszenzlichtmikroskopie ist das Fluoreszenzermöglichungslicht Fluoreszenzanregungslicht, das die Fluoreszenzmarker über einen elektronischen Übergang in einen angeregten Zustand überführt, aus dem der Fluoreszenzmarker unter spontaner Emission von Fluoreszenzlicht in seinen Grundzustand zurückkehrt. Das Fluoreszenzverhinderungslicht entvölkert dabei den angeregten Zustand, indem es den Fluoreszenzmarker zur Emission von Licht einer anderen Wellenlänge als derjenigen des Fluoreszenzlichts stimuliert, das aufgrund seiner anderen Wellenlänge von dem Fluoreszenzlicht, das aus der Nullstelle des Fluoreszenzverhinderungslichts spontan emittiert wird, abgetrennt werden kann.

Bei der STED-Rasterfluoreszenzlichtmikroskopie muss das Fluoreszenzverhinderungslicht außerhalb seiner Nullstelle eine sehr hohe Intensität aufweisen, um die mit dem Fluoreszenzermöglichungslicht zur Emission von Fluoreszenzlicht angeregten Fluoreszenzmarker durch stimulierte Emission wieder abzuregen, bevor sie spontan Fluoreszenzlicht emittieren können, weil die Lebensdauer des angeregten elektronischen Zustands der Fluoreszenzmarker nur kurz ist.

Bei der schaltbare Fluorophore verwendenden REversible Saturable OpticaL Fluorescence Transitions (RESOLFT)-Rasterfluoreszenzlichtmikroskopie schaltet das Fluoreszenzermöglichungslicht die Fluoreszenzmarker in einen fluoreszenten Zustand, in dem sie durch zusätzliches Fluoreszenzanregungslicht zur spontanen Emission von Fluoreszenzlicht anregbar sind. Mit dem Fluoreszenzverhinderungslicht werden die eingeschalteten Fluoreszenzmarker bis auf jene im Bereich der Nullstelle des Fluoreszenzverhinderungslichts wieder ausgeschaltet. Fluoreszenzlicht, dessen Emission anschließend durch das zusätzliche Fluoreszenzanregungslicht hervorgerufen wird, kann dann nur noch aus dem Bereich der Nullstelle des Fluoreszenzverhinderungslichts stammen.

Bei der RESOLFT-Rasterfluoreszenzlichtmikroskopie reichen geringere Intensitäten für das Fluoreszenzverhinderungslicht als bei der STED-Rasterfluoreszenzlichtmikroskopie aus, weil der eingeschaltete Zustand der Fluoreszenzmarker, soweit er nicht stabil ist, zumindest eine längere Lebensdauer als ein elektronischer Zustand hat, aus dem heraus die Fluoreszenzmarker das Fluoreszenzlicht emittieren. Dafür werden aber spezielle schaltbare Fluoreszenzmarker benötigt.

Bei der Ground State Depletion (GSD)-Rasterfluoreszenzlichtmikroskopie werden Fluoreszenzmarker mit dem Fluoreszenzverhinderungslicht durch einen elektronischen Übergang aus ihrem Grundzustand in einen Dunkelzustand überführt, in dem sie bei der Beaufschlagung der Probe mit Fluoreszenzanregungslicht als Fluoreszenzermöglichungslicht nicht zur spontanen Emission von Fluoreszenzlicht anregbar sind. Auch hier kann das anschließend gemessene Fluoreszenzlicht also nur aus der Nullstelle des Fluoreszenzverhinderungslichts stammen.

Bei der GSD-Rasterfluoreszenzlichtmikroskopie besteht eine Schwierigkeit darin, die Fluoreszenzmarker zwar einerseits schnell vollständig in den Dunkelzustand zu überführen, sie aber andererseits daraus auch zügig wieder zurückzubekommen, wenn ein benachbarter Messbereich der Probe gemessen werden soll.

### STAND DER TECHNIK

Aus V. Westphal und S.W. Hell: Nanoscale Resolution in the Focal Plane of an Optical Microscope, PRL 94, 143903 (2005) ist ein Verfahren zum hochauflösenden Abbilden einer mit Fluoreszenzmarkern markierten Struktur einer zweidimensionalen Probe bekannt, das die Merkmale des Oberbegriffs des unabhängigen Patentanspruchs 1 aufweist und zur STED-Rasterfluoreszenzlichtmikroskopie zählt. Das Fluoreszenzverhinderungslicht wird mit einer linienförmigen Nullstelle ausgebildet. In einem Vergleichsbeispiel werden zwei Teilintensitätsverteilungen des Fluoreszenzverhinderungslichts, die jeweils eine linienförmige Nullstelle aufweisen, mit orthogonaler Ausrichtung der Linien überlagert, um eine punktförmige Nullstelle zu definieren. Zur Ausbildung der beiden Teilintensitätsverteilungen des Fluoreszenzverhinderungslichts wird das Fluoreszenzverhinderungslicht in zwei Teilstrahlen aufgeteilt. Bei fester Lichtleistung wird die maximale Ortsauflösung unter Verwendung des Fluoreszenzverhinderungslichts mit der linienförmigen Nullstelle in Richtung orthogonal zu der linienförmigen Nullstelle erreicht. In Richtung der linienförmigen Nullstelle bleibt die Ortsauflösung aber auf dem Niveau eines konfokalen Rasterfluoreszenzlichtmikroskops. Wenn die Ortsauflösung mittels der punktförmigen Nullstelle in beiden Richtungen erhöht wird, bleibt die Ortsauflösung bei gleicher Lichtleistung des Fluoreszenzverhinderungslichts signifikant geringer als die maximale Ortsauflösung bei der ersten Ausführungsform des bekannten Verfahrens.

Aus der US 2012/0104279 A1 ist ein Verfahren zum hochauflösenden Abbilden einer mit Fluoreszenzmarkern markierten Struktur einer Probe bekannt, das in einer Ausführungsform zur STED-Rasterfluoreszenzlichtmikroskopie zählt, das aber auch als Verfahren der GSD- oder RESOLFT-Rasterfluoreszenzlichtmikroskopie ausgeführt werden kann. Das Fluoreszenzverhinderungslicht wird mit einer Donut-förmigen Intensitätsverteilung um eine punktförmige Nullstelle ausgebildet. Dabei kann der Feldvektor des elektrischen Felds in dem Donut rotieren oder eine feste Ausrichtung beibehalten, um im Bereich des Donuts entweder alle Fluoreszenzmarker unabhängig von ihrer Dipolorientierung in zwei Raumrichtungen oder gezielt jeden Fluoreszenzmarker nur in der Richtung orthogonal zur jeweiligen Orientierung seines Dipols (somit in einer Raumrichtung) an Fluoreszenz zu hindern.

Aus der US 2007/0206278 A1 ist ein Verfahren zum hochauflösenden Abbilden einer mit Fluoreszenzmarkern markierten Struktur einer zweidimensionalen Probe bekannt, das als Verfahren der RESOLFT- oder GSD-Rasterfluoreszenzlichtmikroskopie ausgeführt sein kann. Bei der RESOLFT-Ausführungsform wird die Probe zunächst mit einer linienförmigen Intensitätsverteilung von Fluoreszenzermöglichungslicht in einen fluoreszenzfähigen Zustand eingeschaltet. In der GSD-Ausführungsform des bekannten Verfahrens wird stattdessen ggf. gewartet, bis die Fluoreszenzmarker in ihren fluoreszenzfähigen Grundzustand zurückgekehrt sind. Dann wird die Probe in demselben linienförmigen Messbereich mit Fluoreszenzverhinderungslicht einer linienförmigen Intensitätsverteilung von Fluoreszenzverhinderungslicht beaufschlagt, das die Fluoreszenzmarker bis auf diejenigen, die sich in einer linienförmigen Nullstelle des Fluoreszenzverhinderungslichts im Zentrum des linienförmigen Messbereichs befinden, aus ihrem fluoreszenzfähigen Zustand in einen Dunkelzustand ausschaltet. Anschließend wird der linienförmige Messbereich mit Fluoreszenzanregungslicht beaufschlagt. Das dann aus dem linienförmigen Messbereich der Probe emittierte Fluoreszenzlicht wird mit einem Liniendetektor, d. h. einem längs der Linie räumlich auflösenden Detektor, gemessen. Die hier beschriebenen Schritte werden für eine Mehrzahl von Messbereichen wiederholt, um die Probe mit der linienförmigen Nullstelle des Fluoreszenzverhinderungslichts abzutasten. Dieses Abtasten der Probe kann nacheinander mit unterschiedlicher Ausrichtung der linienförmigen Nullstelle des Fluoreszenzverhinderungslichts erfolgen, und aus den dabei gewonnenen mehreren Bildern der Probe kann mathematisch ein Gesamtbild errechnet werden, das eine erhöhte Ortsauflösung in mehreren Richtungen aufweist. Das bekannte Verfahren soll das Abtasten der Probe gegenüber einem punktweisen Abtasten beschleunigen. Die für die STED-Rasterfluoreszenzlichtmikroskopie benötigten Intensitäten des Fluoreszenzverhinderungslichts könnten nicht sinnvoll über eine linienförmige Intensitätsverteilung des Fluoreszenzverhinderungslicht mit linienförmiger Nullstelle hinweg realisiert werden, weil sich die Lichtleistung des Fluoreszenzverhinderungslichts dafür über eine zu große Fläche verteilt.

Aus der US 2013/0176574 A1 sind ein Verfahren und ein Rasterfluoreszenzlichtmikroskop zum mehrdimensional hochauflösenden Abbilden einer mit Fluoreszenzmarkern markierten Struktur einer Probe bekannt. Hier wird die Probe ausschließlich mit Fluoreszenzanregungslicht beaufschlagt. Die Beaufschlagung erfolgt dabei jeweils in einem beugungsbegrenzten Messbereich, und aus diesem Messbereich emittiertes Fluoreszenzlicht wird mit einem Punktdetektor gemessen. Zur Verbesserung der Ortsauflösung werden die Phasenfronten des Fluoreszenzanregungslichts vor seinem Fokussieren in die Probe so moduliert, dass sich verschiedene Interferenzmuster in dem Messbereich ausbilden. Diese Interferenzmuster können solche mit linienförmigen Nullstellen in verschiedenen Winkelstellungen umfassen. Mit jedem dieser Interferenzmuster in dem Messbereich wird die Probe vollständig abgetastet, und die Messwerte des Fluoreszenzlichts zu den verschiedenen Interferenzmustern werden gemeinsam mathematisch ausgewertet, um ein Bild mit höherer Ortsauflösung als der Größe des Messbereichs zu erzielen. Beim Abtasten der Probe mit dem Messbereich können auch an jedem Ort des Messbereichs in der Probe alle Interferenzmuster nacheinander eingestellt und dazu jeweils das Fluoreszenzlicht gemessen werden, bevor ein nächster Punkt der Probe mit dem Messbereich angefahren wird.

Aus der DE 10 2011 055 367 A1 sind ein Verfahren und ein Rasterfluoreszenzlichtmikroskop zum Verfolgen einer Bewegung eines mit einem Fluoreszenzmarker markierten Partikels in einer Probe bekannt. Dabei wird Fluoreszenzanregungslicht mit einer ein räumlich begrenztes Minimum aufweisenden Intensitätsverteilung auf die Probe gerichtet; und das Minimum wird dem sich in der Probe bewegenden Partikel nachgeführt, indem die Intensitätsverteilung so gegenüber der Probe verschoben wird, dass eine Rate der von dem Partikel emittierten Photonen minimal bleibt. Dies ist solange der Fall, wie sich der Partikel in dem Minimum der Intensitätsverteilung des Fluoreszenzanregungslichts befindet. Phasenbeziehungen von Lichtstrahlen, aus denen die Intensitätsverteilung des Fluoreszenzanregungslichts durch Interferenz generiert wird, können nacheinander zu in unterschiedlichen Richtungen ausgerichteten linien- oder flächenförmigen Minima führen, die als rotierende Streifen bezeichnet werden können und die einen Punkt oder eine Linie als räumliche Schnittmenge aufweisen. Wenn zwischen solchen verschiedenen Phasenbeziehungen schnell umgeschaltet wird und für jede der Phasenbeziehungen einzeln oder auch über die gesamte Variation der Phasenbeziehungen hinweg das Minimum der Rate der von dem Partikel emittierten Photonen aufgesucht wird, kann die Bewegung des Partikels in der Probe in allen drei Dimensionen verfolgt werden.

Bei der Image-Scanning Mikroskopie (ISM) wird eine mit Fluoreszenzmarkern markierte Struktur einer Probe wie bei der herkömmlichen konfokalen Rasterfluoreszenzlichtmikroskopie mit einem beugungsbegrenzten Messbereich abgetastet, in den Fluoreszenzanregungslicht als Fluoreszenzermöglichungslicht fokussiert wird. Anders als bei der herkömmlichen konfokalen Rasterfluoreszenzlichtmikroskopie wird zu jeder Position des Messbereichs das aus dem Messbereich von der Probe emittierte Fluoreszenzlicht zwar konfokal, aber mit einem Sensorarray registriert, wobei seine Intensitätsverteilung über das Sensorarray aufgezeichnet wird. Dabei kann der beugungsbegrenzte Messbereich wegen der Beugungsgrenze zwar nicht räumlich aufgelöst werden. Es werden aber dennoch zusätzliche Informationen über die Lage der das Fluoreszenzlicht emittierenden Fluoreszenzmarker gewonnen. Zunächst entstehen vier- bzw. fünfdimensionale Datensätze, bei denen zwei bzw. drei Dimensionen der Position des Messbereichs in der Probe und zwei weitere Dimensionen den Koordinaten innerhalb des Sensorarrays entsprechen, an denen zu der Position des Messbereichs das Fluoreszenzlicht aufgezeichnet wurde. Aus diesen Datensätzen lässt sich ein finales Bild mit erhöhter Auflösung errechnen. Die auf diese Weise erreichbare maximale Auflösung entspricht der in der Structured-Illumination Mikroskopie (SIM) erreichbaren Auflösung und ist um einen Faktor zwei besser als die Auflösung bei der herkömmlichen konfokalen Rasterfluoreszenzlichtmikroskopie. Ein Verfahren der ISM und ein entsprechendes Rasterfluoreszenzlichtmikroskop sind beispielsweise in der EP 2 317 362 A1 beschrieben. Detailliert beschrieben wird die ISM auch von Claus B. Müller und Jörg Enderlein: Image Scanning Microscopy, Physical Review Letters, Vol. 104, 198101 (2010). Die mathematischen Grundlagen der ISM werden bereits offenbart von C. J. R. Sheppard: Super-resolution in confocal imaging, Optik, 80 Nr. 2 (1988) 53-54.

Eine direkte optische Umsetzung der bei der ISM sonst mathematisch erfolgenden Auswertung wird beschrieben von Stephan Roth, Colin JR Sheppard, Kai Wicker und Rainer Heintzmann: Optical photon reassignment microscopy (OPRA); Optical Nanoscopy 2013, 2:5.

Aus Thomas Klar et al.: "Breaking Abbe's diffraction resolution limit in fluorescence microscopy with stimulated emission depletion beams of various shapes", PHYSICAL REVIEW E, Bd. 64, Nr. 6, 1. November 2001 ist ein Verfahren mit den Merkmalen des Oberbegriffs des unabhängigen Patentanspruchs 1 bekannt, bei dem die Nullstelle der Intensitätsverteilung des Fluoreszenzverhinderungslichts in unterschiedlicher Weise ausgeformt werden kann. Konkret kann jeweils mit einer einzigen Phasenplatte eine flächenförmige oder eine Nullstelle in Form zweier sich unter einem rechten Winkel kreuzender Flächen ausgebildet werden.

Aus der EP 1 862 839 A1 ist ein Mikroskop mit erhöhter Auflösung durch teilweise räumliche Überlagerung in der Beleuchtung durch einen Anregungsstrahl und einen Abregungsstrahl und/oder einen Umschaltstrahl in einer fluoreszierenden Probe bekannt. Dabei ist im Anregungsstrahl und/oder im Abregungsstrahl und/oder Umschaltstrahl mindestens eine Kombination von die räumliche Phase zirkular oder radial beeinflussenden Mitteln angeordnet. Verschiedene Teilintensitätsverteilungen des Abregungsstrahls können in der Probe inkohärent überlagert werden, um eine gewünschte Gesamtintensitätsverteilung des Abregungsstrahls zu erreichen.

Aus der EP 2 444 832 A1 ist ein SPIM-Mikroskop (Selective Plane Imaging Microscopy) bekannt, welches mit einer y-Richtungs-Beleuchtungsquelle und einer z-Richtungs-Detektionslicht-Kamera versehen ist. Ein x-Scanner erzeugt durch Scannen des Beleuchtungs-Lichtstrahls in x-Richtung ein sequenzielles Lightsheet. Durch wahlweises Hinzuschalten eines STED-Abregungsstrahls lässt sich das Lightsheet wahlweise verdünnen und damit die optische Auflösung erhöhen.

Eine spezielle Ausführungsform der SPIM ist aus der WO 2010/014244 A2 bekannt. Hier wird die Probe mit zwei Lichtsheets aus einander entgegengesetzten Richtungen quer zu der Detektionsrichtung beleuchtet.

### AUFGABE DER ERFINDUNG

Der Erfindung liegt die Aufgabe zugrunde, ein Verfahren zum mehrdimensional hochauflösenden Abbilden einer mit Fluoreszenzmarkern markierten Struktur einer Probe, das die Merkmale des Oberbegriffs des Patentanspruchs 1 aufweist, aufzuzeigen, bei dem eine gewünschte Ortsauflösung in allen der mehreren Dimensionen mit einer geringeren Lichtleistung des Fluoreszenzverhinderungslichts erreicht wird als bislang. Weiterhin sollen ein entsprechendes Verfahren zum mehrdimensional hochauflösenden Abbilden eines Wegs eines mit einem Fluoreszenzmarker markierten Partikel in einer Probe sowie Rasterfluoreszenzlichtmikroskope zur Durchführung der Verfahren aufgezeigt werden, das die Merkmale des Oberbegriffs des Patentanspruchs 8 aufweist.

### LÖSUNG

Die Aufgabe der Erfindung wird durch ein Verfahren zum mehrdimensional hochauflösenden Abbilden einer mit Fluoreszenzmarkern markierten Struktur einer Probe, das die Merkmale des unabhängigen Patentanspruchs 1 aufweist, ein Verfahren zum mehrdimensional hochauflösenden Abbilden eines Wegs eines mit einem Fluoreszenzmarker markierten Partikels in einer Probe, das die Merkmale des unabhängigen Patentanspruchs 8 aufweist, und Rasterfluoreszenzlichtmikroskope zur Durchführung der Verfahren nach den nebengeordneten Patentansprüchen 10 und 13 gelöst. Die abhängigen Patentansprüche definieren bevorzugte Ausführungsformen der erfindungsgemäßen Verfahren und der erfindungsgemäßen Rasterfluoreszenzlichtmikroskope.

### BESCHREIBUNG DER ERFINDUNG

Bei einem erfindungsgemäßen Verfahren zum mehrdimensional hochauflösenden Abbilden einer mit Fluoreszenzmarkern markierten Struktur einer Probe werden die folgenden Schritte für eine Vielzahl von Messbereichen in der Probe wiederholt: Der Messbereich wird zunächst mit Fluoreszenzermöglichungslicht, d. h. im Falle einer STED-Ausführungsform des Verfahrens mit Fluoreszenzanregungslicht, beaufschlagt. Dabei wird das Fluoreszenzermöglichungslicht in die Probe fokussiert, und der von dem Fluoreszenzermöglichungslicht in der Probe ausgeleuchtete Bereich ist der Messbereich. Der Messbereich ist in der Regel kreisförmig, das heißt, quer zu der Richtung, aus der die Probe mit dem Fluoreszenzermöglichungslicht beaufschlagt wird, weist er einen kreisförmigen Querschnitt auf.

Dann wird ein Teilbereich des Messbereichs mit Fluoreszenzverhinderungslicht beaufschlagt, wobei der Teilbereich ein Zentrum des Messbereichs auslässt, indem eine Intensitätsverteilung des Fluoreszenzverhinderungslichts eine sich über das Zentrum hinweg erstreckende linienoder flächenförmige Nullstelle aufweist. Wenn im Folgenden statt von einer linien- oder flächenförmigen Nullstelle teilweise nur von einer linienförmigen Nullstelle die Rede ist, so ist damit immer auch eine flächenförmige Nullstelle gemeint, soweit nicht ausdrücklich etwas anderes angegeben ist oder sich nicht eindeutig etwas anderes aus dem jeweiligen Zusammenhang ergibt.

Bei der STED-Ausführungsform des Verfahrens ist das Fluoreszenzverhinderungslicht STED-Licht, also Licht, das die mit dem Fluoreszenzanregungslicht angeregten Fluoreszenzmarker zur Emission von anderem Licht als von Fluoreszenzlicht anregt und damit wieder abregt. Da die Nullstelle linienförmig ist und sich über das Zentrum des Messbereichs hinweg erstreckt, lässt der Teilbereich des Messbereichs, in dem das Fluoreszenzverhinderungslicht eine Emission von Fluoreszenzlicht verhindert, nicht nur das Zentrum selbst, sondern den gesamten Bereich der linienförmigen Nullstelle aus. Das aus dem Messbereich von der Probe emittierte Fluoreszenzlicht wird ohne räumliche Auflösung innerhalb des Messbereichs gemessen.

Das Messen des Fluoreszenzlichts erfolgt für mehrere aufeinander folgende Winkelstellungen der Nullstelle um das Zentrum, wobei für jede der Winkelstellungen der Nullstelle der Messbereich mit dem Fluoreszenzermöglichungslicht beaufschlagt wird. D. h. bei jeweils gleicher Beaufschlagung des Messbereichs mit dem Fluoreszenzermöglichungslicht wird das aus dem gleichen Messbereich emittierte Fluoreszenzlicht für unterschiedliche Winkelstellungen der Nullstelle des Fluoreszenzverhinderungslichts gemessen. Mindestens wird das aus dem Messbereich emittierte Fluoreszenzlicht für zwei unterschiedliche Winkelstellungen der Nullstelle um das Zentrum gemessen und einem durch die Lage des Zentrums in der Probe definierten Ort zugeordnet.

Unabhängig von seiner weiteren Auswertung enthält das für die mindestens zwei unterschiedlichen Winkelstellungen der Nullstelle um das Zentrum gemessene Fluoreszenzlicht Informationen über die mit den Fluoreszenzmarkern markierte interessierende Struktur in der Probe, die eine räumliche Auflösung aufweisen, die gleich einer minimalen Erstreckung der Nullstelle durch das Zentrum des Messbereichs ist. Diese minimale Erstreckung der Nullstelle ist bei dem erfindungsgemäßen Verfahren um einen Faktor k ≥ 2 kleiner als ein beugungsbegrenzter Durchmesser des Messbereichs. Dieser Faktor k entspricht der Verbesserung der Ortsauflösung des erfindungsgemäßen Verfahrens gegenüber dem Aufnehmen eines konfokalen rasterfluoreszenzlichtmikroskopischen Bilds der Struktur. Der Faktor k kann dabei deutlich größer als 2, beispielsweise auch größer als 5 oder gar 10 sein.

Bei dem erfindungsgemäßen Verfahren wird der jeweilige Faktor k, der sich trotz der linienoder flächenförmigen Nullstelle als Verbesserung der Ortsauflösung in allen Dimensionen ergibt, in denen die jeweilige interessierende Struktur abgebildet wird, bei einer ungewöhnlich geringen Lichtleistung des Fluoreszenzverhinderungslichts erreicht. Konkret ist für das Abbilden einer Struktur in einer zweidimensionalen Probe unter Ausbildung einer linienförmigen Nullstelle nur etwa die Hälfte, tendenziell sogar etwas weniger als 50 % der Lichtleistung erforderlich als wenn zum Erreichen derselben Ortsauflösung in beiden Raumrichtungen der Probe eine punktförmige Nullstelle ausgebildet wird. Dass nur etwa die Hälfte der Lichtleistung wie für eine punktförmige Nullstelle benötigt wird, kann man sich dadurch erklären, dass bei dem erfindungsgemäßen Verfahren das Zentrum des Messbereichs bei einer zweidimensionalen Probe nur aus einer und nicht aus zwei Richtungen eingegrenzt wird. Diese Erklärung hält auch einer genaueren Nachprüfung stand. Der darüber hinausgehende Vorteil bei der Lichtleistung, d. h., dass weniger als die halbe Lichtleistung für dieselbe Ortsauflösung benötigt wird, mag darauf zurückzuführen sein, dass es einfacher ist, eine linienförmige Nullstelle auszubilden als eine punktförmige, ohne die Ausbeute an Fluoreszenzlicht aus dem Zentrum des Messbereichs zu beeinträchtigen.

Bei dem erfindungsgemäßen Verfahren wird die erhöhte Ortsauflösung in allen Raumrichtungen anders als bei V. Westphal und S.W. Hell: Nanoscale Resolution in the Focal Plane of an Optical Microscope, PRL 94, 143903 (2005) nicht dadurch erreicht, dass mehrere Teilintensitätsverteilungen des Fluoreszenzverhinderungslichts so überlagert werden, dass die Abmessungen einer Nullstelle des gesamten Fluoreszenzverhinderungslichts nur noch den Abmessungen einer Schnittmenge der einzelnen Nullstellen der einzelnen Teilintensitätsverteilungen entsprechen. Vielmehr wird für jede Winkelstellung der nicht punktförmigen, sondern linien- oder flächenförmigen Nullstelle die Probe mit Fluoreszenzermöglichungslicht beaufschlagt und entsprechend auch Fluoreszenzlicht aus der gesamten linien- oder flächenförmigen Nullstelle registriert.

Bei dem erfindungsgemäßen Verfahren wird eine grundsätzlich höhere Ortsauflösung in allen Raumrichtungen als bei dem aus der US 2007/0206278 A1 bekannten Verfahren erreicht. Dies ist unter anderem darauf zurückzuführen, dass die Intensität des Fluoreszenzermöglichungslichts von dem Zentrum des Messbereichs weg in allen Raumrichtungen abnimmt und dadurch die Punktspreizfunktion (PSF) anders als in der Erstreckungsrichtung des linienförmigen Messbereichs der US 2007/0206278 A1 in allen Raumrichtungen schnell abklingt.

In bestimmten Ausführungsformen des erfindungsgemäßen Verfahrens werden nicht nur verschiedene rasterfluoreszenzlichtmikroskopische Bilder der Struktur mit verschiedener Winkelstellung der Nullstelle aufgenommen und dann mathematisch zusammengeführt, um ein in allen Raumrichtungen hochaufgelöstes Bild der Struktur zu berechnen. Vielmehr kann stattdessen oder zusätzlich eine Intensitätssumme zumindest eines Anteils des für jede der mehreren Winkelstellungen gemessenen Fluoreszenzlichts über die mehreren Winkelstellungen der Nullstelle hinweg aufsummiert werden, um die räumliche Verteilung dieser Intensitätssumme als erstes in allen Raumrichtungen hochaufgelöstes rasterfluoreszenzlichtmikroskopisches Abbild der interessierenden Struktur zu erhalten. Dieses Abbild der Struktur kann dann wiederum weiter ausgewertet und bearbeitet werden.

Die Intensitätssumme kann beispielsweise dadurch gebildet werden, dass das gesamte aus dem Messbereich emittierte Fluoreszenzlicht über die mehreren Winkelstellungen der Nullstelle des Fluoreszenzverhinderungslichts um das Zentrum hinweg aufsummiert wird. Für ein derartiges Bilden der Intensitätssumme sind für den jeweiligen Messbereich die verschiedenen Winkelstellungen der Nullstelle um sein Zentrum direkt nacheinander auszubilden. Das dabei aus der Probe emittierte Fluoreszenzlicht kann auf einfachste Weise, d. h. ohne zeitliche Auflösung, über das Einstellen der verschiedenen Winkelstellungen der Nullstelle hinweg gemessen werden.

Grundsätzlich kann das erfindungsgemäße Verfahren zum mehrdimensional hochauflösenden Abbilden einer mit Fluoreszenzmarkern markierten Struktur einer Probe aber auch so durchgeführt werden, dass die gesamte Probe oder zumindest ein interessierender Bereich der Probe zunächst jeweils vollständig mit dem Messbereich bei einer Winkelstellung der Nullstelle abgetastet wird, bevor die nächste Winkelstellung der Nullstelle eingestellt und das vollständige Abtasten wiederholt wird. Es ist weiterhin möglich, dass die Probe zeilenweise nacheinander mit den verschiedenen Winkelstellungen der Nullstelle abgetastet wird. Auch so wird aus jedem Messbereich emittiertes Fluoreszenzlicht für mehrere aufeinander folgende Winkelstellungen der Nullstelle um das Zentrum gemessen, wobei für jede der Winkelstellungen der Nullstelle der Messbereich mit Fluoreszenzermöglichungslicht beaufschlagt wird. Das Bilden der Intensitätssumme erfolgt dann nicht über zeitlich direkt aufeinander folgende Messwerte des Fluoreszenzlichts oder deren Anteile, sondern über die jeweils einem Messbereich zugeordneten Messwerte oder deren Anteile.

Ein Anteil des aus dem Messbereich emittierten Fluoreszenzlichts, der über die mehreren Winkelstellungen hinweg zu der Intensitätssumme aufsummiert werden kann und der besonders viel räumlich hochaufgelöste Information über die interessierende Struktur in der Probe enthält, ist ein Gleichanteil des aus dem Messbereich emittierten Fluoreszenzlichts, der über die mehreren Winkelstellungen der Nullstelle hinweg konstant bleibt.

Auch wenn das aus dem Messbereich emittierte Fluoreszenzlicht für die mehreren aufeinander folgenden Winkelstellungen der Nullstelle um das Zentrum für einen bestimmten Messbereich direkt hintereinander gemessen wird, erfolgt dies mit einer so hohen zeitlichen Auflösung, dass die mehreren aufeinander folgenden Winkelstellungen der Nullstelle bezüglich des aus ihren Bereichen emittierten Fluoreszenzlichts bei dem gemessenen Fluoreszenzlicht aufgelöst werden.

Unabhängig von der Art und Weise, wie sie erzielt wird, kann eine solche Auflösung des gemessenen Fluoreszenzlichts genutzt werden, um beispielsweise vornehmlich oder nur das Fluoreszenzlicht auszuwerten, bei dem die Nullstelle quer zu einem Verlauf der interessierenden Struktur in der Probe orientiert ist, so dass dieser Verlauf besonders hoch räumlich aufgelöst wird.

Eine solche Auflösung des gemessenen Fluoreszenzlichts in Bezug auf die mehreren aufeinander folgenden Winkelstellungen der Nullstelle kann auch dazu genutzt werden, den Verlauf einer zusammenhängenden mit den Fluoreszenzmarkern markierten Struktur in der Probe zu verfolgen, ohne die gesamte Probe abzutasten. So können die Messbereiche gezielt in Richtung der Winkelstellungen der Nullstelle, in denen das Fluoreszenzlicht seine höchste Intensität aufweist, aneinandergereiht werden. Das Fluoreszenzlicht weist seine höchste Intensität auf, wenn die Nullstelle nicht nur im Zentrum des Messbereichs, sondern auch außerhalb des Zentrums, im Idealfall über ihre gesamte Erstreckung mit der mit den Fluoreszenzmarkern markierten Struktur zusammenfällt. Auch Verzweigungen der Struktur werden bei diesem Vorgehen erkannt, weil es dann mehrere Winkelstellungen der Nullstelle gibt, in denen das Fluoreszenzlicht höhere Intensitäten als bei anderen Winkelstellungen der Nullstelle aufweist.

Um eine in allen Raumrichtungen möglichst gleiche räumliche Auflösung beim Abbilden der interessierenden Struktur in der Probe zu erreichen, werden die mehreren Winkelstellungen der Nullstelle vorzugsweise über einen vollen Kreis- oder Raumwinkel um das Zentrum gleichmäßig verteilt. Jeder Punkt eines kreisförmigen Messbereichs wird von einer linienförmigen Nullstelle, deren minimale Erstreckung um den Faktor k kleiner als der Durchmesser des Messbereichs ist, zumindest einmal erfasst, wenn die linienförmige Nullstelle in mindestens πk/2 gleichmäßig verteilten Winkelstellungen um das Zentrum auf den Messbereich gerichtet wird. Unter diesem Gesichtspunkt muss die Anzahl der gleichmäßig verteilten Winkelstellungen aber auch nicht größer als πk/2 + 1 sein. Grundsätzlich ist eine solche gleichmäßige Verteilung der mehreren Winkelstellungen der Nullstelle bei dem erfindungsgemäßen Verfahren zum mehrdimensional hochauflösenden Abbilden aber nicht zwingend.

Mindestens beträgt die Zahl der mehreren Winkelstellungen der Nullstelle um das Zentrum jedes Messbereichs 2 bei linienförmigen Nullstellen und 3 bei flächenförmigen Nullstellen. Solange der Zahl der Winkelstellungen kleiner als der Faktor k bleibt, insbesondere nicht größer als k/2 wird, weist das erfindungsgemäße Verfahren ein erhebliches Potential zur Beschleunigung des Abtastens der Probe auf, weil aussagekräftige Mengen von Fluoreszenzlicht für jede Winkelstellung der Nullstelle in jedem Messbereich schneller erhalten werden als bei einer eindimensionalen Nullstelle, wenn die verschiedenen Messbereiche gleiche Abstände aufweisen. Dies liegt daran, dass bei einem Faktor k das aus dem Bereich der Nullstelle von einer zweidimensionalen Probe emittierte Fluoreszenzlicht im Mittel auf 1/k² zurückgeht, während es bei einer linienförmigen Nullstelle im Mittel nur auf 1/k zurückgeht. Dieselbe Menge an Fluoreszenzlicht wird also bei einer linienförmigen Nullstelle in einer auf 1/k verkürzten Zeit gemessen. Wenn dies für nicht mehr als k/2 verschiedene Winkelstellungen der Nullstelle erfolgt, reduziert sich die Gesamtmessdauer immer noch auf die Hälfte oder weniger gegenüber derjenigen, die benötigt wird, um bei einer punktförmigen Nullstelle eine aussagekräftige Menge an Fluoreszenzlicht zu messen. Unter einer signifikanten oder aussagekräftigen Menge an Fluoreszenzlicht ist insbesondere eine solche Menge an Fluoreszenzlicht zu verstehen, die signifikant über das Rauschen des zum Messen des Fluoreszenzlichts verwendeten Detektors hinaus geht und so eine Aussage über das Vorhandensein von Fluoreszenzmarkern innerhalb der jeweiligen Nullstelle erlaubt.

Ein Winkel der Nullstelle um das Zentrum des Messbereichs kann während des Messens des Fluoreszenzlichts aber nicht nur diskontinuierlich, sondern auch kontinuierlich geändert werden. Dabei kann eine signifikante Menge an Fluoreszenzlicht auch nur einmal für die Gesamtheit der Winkelstellungen der Nullstelle und damit in insgesamt auf 1/k reduzierter Zeit gemessen werden. Wenn hingegen die effektive Anzahl der Winkelstellungen der Nullstelle, für die jeweils eine signifikante Menge an Fluoreszenzlicht gemessen wird, k überschreitet, geht zwar ein Geschwindigkeitsvorteil verloren. In dem gemessenen Fluoreszenzlicht sind dann aber zusätzliche Informationen über die interessierende Struktur in allen Raumrichtungen enthalten. Tatsächlich wird mit dem erfindungsgemäßen Verfahren eine bestimmte Ortsauflösung in allen Raumrichtungen immer mit weniger Fluoreszenzverhinderungslicht erreicht, als wenn die Nullstelle gleichzeitig in all diesen Raumrichtungen mit dem Fluoreszenzverhinderungslicht eingegrenzt würde.

Selbst wenn die Anzahl der Winkelstellungen der Nullstelle um das Zentrum, für die jeweils eine signifikante Menge an Fluoreszenzlicht gemessen wird, k oder πk/2 erreicht, reduziert das erfindungsgemäße Verfahren also die Gefahr des Bleichens der Fluoreszenzmarker, mit denen die interessierende Struktur markiert ist. Zu jedem Zeitpunkt des erfindungsgemäßen Verfahrens wird die Probe gegenüber einem Verfahren mit einer punktförmigen Nullstelle zum Erreichen derselben räumlichen Auflösung in dem Messbereich nur mit der halben Lichtleistung beaufschlagt. Dabei verteilen sich die Bereiche mit der höchsten Intensität des Fluoreszenzverhinderungslichts in dem Messbereich nicht ring- oder kugelförmig um den gesamten Umfang des Messbereichs, sondern sie konzentrieren sich auf die von der Nullstelle entfernt liegenden Randbereiche des Messbereichs, und mit den mehreren verschiedenen Winkelstellungen der Nullstelle ändern sich die von diesen Intensitäten betroffenen Teile des Messbereichs. Die damit verbundene Absenkung der Gefahr des Bleichens der Fluoreszenzmarker geht daher nicht einmal dann verloren, wenn jeder Messbereich bei dem erfindungsgemäßen Verfahren länger als bei einem Verfahren mit einer punktförmigen Nullstelle gemessen wird.

Da das erfindungsgemäße Verfahren eine Ortsauflösung mit den minimalen Abmessungen der Nullstelle über das Zentrum des Messbereichs hinweg erreicht, ist die Probe mit den Messbereichen in einem auf diese hohe Ortsauflösung abgestimmten Rastermaß abzutasten. Konkret sollte das Rastermaß in jeder Raumrichtung, in der die hohe Ortsauflösung erreicht werden soll, kleiner als die minimale Erstreckung der Nullstelle sein. Die höchste räumliche Auflösung wird dann erreicht, wenn das Rastermaß halb so groß ist, wie die minimale Erstreckung der Nullstelle. Mit noch höheren Rastermaßen wird die Ortsauflösung nicht mehr besser.

Um die Fluoreszenzmarker in der Probe möglichst wenig zu belasten, d. h. um die Gefahr des Bleichens der Fluoreszenzmarker zu minimieren, können die Schritte des Beaufschlagens und Messens direkt nacheinander gezielt für einander nicht überlappende Messbereiche ausgeführt werden. Das heißt, nach dem Ausführen der Schritte des erfindungsgemäßen Verfahrens für einen Messbereich wird kein in dem Raster benachbarter Messbereich angefahren, sondern ein um wenigstens den Durchmesser des Messbereich beabstandeter Messbereich. Wenn jedoch direkt im Raster benachbarte Messbereiche nacheinander angefahren werden, kann darauf geachtet werden, dass diese in Richtung einer der Winkelstellungen der Nullstelle benachbart sind, weil die in dieser Richtung in der Probe angeordneten Fluoreszenzmarker am geringsten durch das Fluoreszenzverhinderungslicht belastet werden.

Wenn ein aus den aufsummierten Intensitätssummen des Fluoreszenzlichts zusammengesetztes Abbild der Struktur, d. h. die räumliche Verteilung der Intensitätssummen bezüglich enthaltener Raumfrequenzen hochpassgefiltert wird, wird dieses Abbild der Struktur von Anteilen der Intensitätssummen befreit, die man als konfokalen Untergrund bezeichnen kann, die aber auch Signale von größeren Strukturen in der Probe umfassen können. Auf diese Weise konzentriert sich das hochpassgefilterte Abbild auf feinteilige Details der interessierenden Struktur, die mit der gewünschten hohen Ortsauflösung wiedergegeben werden. Umgekehrt ergibt ein Tiefpassfiltern des primären Abbilds der Struktur, d. h. ein Entfernen hoher Raumfrequenzen, ein Pendant zu einem konfokal aufgenommenen Bild der Struktur, d. h. ein Bild mit einer Ortsauflösung von den Abmessungen des Messbereichs.

Das erfindungsgemäße Verfahren zum mehrdimensional hochauflösenden Abbilden eines Wegs eines mit einem Fluoreszenzmarker markierten Partikels in einer Probe weist die für eine Vielzahl von Messbereichen in der Probe wiederholten Schritte auf: Der Messbereich wird mit Fluoreszenzermöglichungslicht beaufschlagt. Ein Teilbereich des Messbereichs wird mit Fluoreszenzverhinderungslicht beaufschlagt, wobei der Teilbereich ein Zentrum des Messbereichs auslässt, indem eine Intensitätsverteilung des Fluoreszenzverhinderungslichts eine sich über das Zentrum hinweg erstreckende linien- oder flächenförmige Nullstelle aufweist. Aus dem Messbereich von der Probe emittiertes Fluoreszenzlicht wird für mehrere aufeinander folgende Winkelstellungen der Nullstelle um das Zentrum mit zeitlicher Auflösung gemessen, wobei die zeitliche Auflösung die mehreren aufeinander folgenden Winkelstellungen der Nullstelle bei dem gemessenen Fluoreszenzlicht auflöst und wobei für jede der Winkelstellungen der Nullstelle der Messbereich mit dem Fluoreszenzermöglichungslicht beaufschlagt wird. Indem der Messbereich in der Probe so nachgeführt wird, dass ein zeitlicher Intensitätsverlauf des über die mehreren Winkelstellungen der Nullstelle hinweg gemessenen Fluoreszenzlichts auf einem vorgegebenen Wert gehalten wird, wird der mit dem Fluoreszenzmarker markierte Partikel in der Probe mit einem festen räumlichen Offset zwischen dem Zentrum des Messbereichs und dem Fluoreszenzmarker verfolgt. Unter Berücksichtigung dieses Offsets wird der Weg des Partikels in der Probe exakt abgebildet. Die dabei erreichte Ortsauflösung hängt davon ab, wieviel kleiner eine minimale Erstreckung der Nullstelle durch das Zentrum des Messbereichs ist als ein Durchmesser des Messbereichs in derselben Richtung. Bei dem erfindungsgemäßen Verfahren beträgt der Faktor, um den die minimale Erstreckung der Nullstelle kleiner ist, mindestens 2, häufig mindestens 5; er kann aber auch 10 und mehr betragen.

Die Anzahl der mehreren Nullstellen, für die das aus dem Messbereich emittierte Fluoreszenzlicht nacheinander gemessen wird, ist bei diesem erfindungsgemäßen Trackingverfahren abhängig von dem gewählten Offset so groß zu wählen, dass der Partikel bei mindestens zwei der Winkelstellungen in die Nullstelle fällt, damit nicht nur die Winkellage des Partikels gegenüber dem Zentrum, sondern auch der Abstand des Partikels von dem Zentrum des Messbereichs erfasst werden kann. Vorzugsweise wird die Winkellage der Nullstelle um das Zentrum des Messbereichs beim Erfassen des aus dem Messbereich emittierten Fluoreszenzlichts kontinuierlich verändert.

Bei beiden erfindungsgemäßen Verfahren kann das aus dem Messbereich von der Probe emittierte Fluoreszenzlicht mit einem Punktdetektor gemessen werden, der vorzugsweise konfokal zu dem Messbereich angeordnet wird. Dies impliziert, dass der Messbereich bei beiden erfindungsgemäßen Verfahren kreisförmig ist.

In einer anderen bevorzugten Ausführungsform beider erfindungsgemäßen Verfahren, insbesondere aber des erfindungsgemäßen Verfahrens zum hochauflösenden Abbilden, wird das aus dem Messbereich von der Probe emittierte Fluoreszenzlicht so konfokal mit einem Sensorarray gemessen, wie dies aus der ISM bekannt ist. Dann kann auch die Auswertung des mit dem Sensorarray gemessenen Fluoreszenzlichts nach den Grundsätzen der ISM erfolgen. Dabei ergibt sich in der jeweils nicht durch das Fluoreszenzverhinderungslicht beeinflussten Richtung, d. h. in der Richtung, in der die linienförmige Nullstelle in ihrer aktuellen Winkelstellung verläuft, eine Auflösungserhöhung um einen Faktor zwei gegenüber der einfachen konfokalen Auflösung. Diese Auflösungserhöhung führt dann über die verschiedenen Winkelstellungen der Nullstelle auch zu einer korrespondierenden Auflösungserhöhung in allen Richtungen.

Ein erfindungsgemäßes Rasterfluoreszenzlichtmikroskop zum mehrdimensional hochauflösenden Abbilden der mit Fluoreszenzmarkern markierten Struktur weist eine Fluoreszenzermöglichungslichtquelle zum Beaufschlagen des Messbereichs mit dem Fluoreszenzermöglichungslicht und eine Fluoreszenzverhinderungslichtquelle zum Beaufschlagen des Teilbereichs des Messbereichs mit dem Fluoreszenzverhinderungslicht auf. Dabei lässt der Teilbereich das Zentrum des Messbereichs aus, indem die Intensitätsverteilung des Fluoreszenzverhinderungslichts die sich über das Zentrum hinweg erstreckende linien- oder flächenförmige Nullstelle aufweist, wobei die minimale Erstreckung der Nullstelle durch das Zentrum des Messbereichs um den Faktor k ≥ 2 kleiner ist als der Durchmesser des Messbereichs in derselben Richtung. Zudem weist die Fluoreszenzverhinderungslichtquelle eine Winkeleinstelleinrichtung auf, die dazu ausgebildet ist, die mehreren aufeinander folgenden Winkelstellungen der Nullstelle um das Zentrum einzustellen, wobei die Fluoreszenzermöglichungslichtquelle dazu ausgebildet ist, den Messbereich für jede der Winkelstellungen der Nullstelle mit dem Fluoreszenzermöglichungslicht zu beaufschlagen. Ein Detektor des Rasterfluoreszenzlichtmikroskops ist dazu vorgesehen, das aus dem Messbereich von der Probe emittierte Fluoreszenzlicht ohne räumliche Auflösung innerhalb des Messbereichs für die mehreren aufeinander folgenden Winkelstellungen der Nullstelle um das Zentrum zu messen und um den mindestens einen Anteil des aus dem Messbereich emittierten Fluoreszenzlichts über die mehreren Winkelstellungen hinweg zu der Intensitätssumme aufzusummieren. Eine Codierungseinrichtung ist dazu vorgesehen, die Intensitätssumme dem durch die Lage des Zentrums in der Probe definierten Ort zuzuordnen. Eine Abtasteinrichtung ist zum Abtasten eines interessierenden räumlichen Bereichs der Probe mit dem Zentrum des Messbereichs vorgesehen. Die einzelnen Komponenten des erfindungsgemäßen Rasterfluoreszenzlichtmikroskops kann der Fachmann aufgrund ihrer hier beschriebenen Funktion anhand des ihm bekannten Stands der Technik aktueller Rasterfluoreszenzlichtmikroskope problemlos ausbilden.

Der Detektor kann dazu ausgebildet sein, das gesamte aus dem Messbereich emittierte Fluoreszenzlicht über die mehreren Winkelstellungen hinweg zu der Intensitätssumme aufzusummieren. Alternativ kann er dazu ausgebildet sein, nur den Gleichanteil des aus dem Messbereich emittierten Fluoreszenzlichts über die mehreren Winkelstellungen hinweg zu der Intensitätssumme aufzusummieren.

Vorzugsweise ist der Detektor dazu ausgebildet, das aus dem Messbereich von der Probe emittierte Fluoreszenzlicht mit zeitlicher Auflösung zu messen, die eine Zuordnung des aktuell gemessenen Fluoreszenzlichts zu der aktuellen Winkelstellung der Nullstelle ermöglicht. Dann kann die Abtasteinrichtung einen Trackingmodus aufweisen, in dem sie die Messbereiche selektiv in Richtung der Winkelstellungen der Nullstelle aneinanderreiht, in denen das Fluoreszenzlicht seine höchste Intensität aufweist. Winkelstellungen der Nullstelle mit geringerer Intensität weisen darauf hin, dass in ihrer Richtung keine Bereiche der mit den Fluoreszenzmarkern markierten Struktur unmittelbar angrenzen.

Ein erfindungsgemäßes Rasterfluoreszenzlichtmikroskop zur Durchführung des Verfahrens zum mehrdimensional hochauflösenden Abbilden eines Wegs eines mit einem Fluoreszenzmarker markierten Partikels in einer Probe weist ebenfalls eine Fluoreszenzermöglichungslichtquelle zum Beaufschlagen des Messbereichs mit dem Fluoreszenzermöglichungslicht und eine Fluoreszenzverhinderungslichtquelle zum Beaufschlagen des Teilbereichs des Messbereichs mit dem Fluoreszenzverhinderungslicht auf, wobei der Teilbereich das Zentrum des Messbereichs auslässt, indem die Intensitätsverteilung des Fluoreszenzverhinderungslichts die sich über das Zentrum hinweg erstreckende linien- oder flächenförmige Nullstelle aufweist, wobei die minimale Erstreckung der Nullstelle durch das Zentrum des Messbereichs um den Faktor k ≥ 2 kleiner ist als die Erstreckung des Messbereichs in derselben Richtung. Weiterhin ist auch hier eine Winkeleinstelleinrichtung der Fluoreszenzverhinderungslichtquelle dazu ausgebildet, die mehreren aufeinander folgenden Winkelstellungen der Nullstelle um das Zentrum einzustellen, wobei die Fluoreszenzermöglichungslichtquelle dazu ausgebildet ist, den Messbereich für jede der Winkelstellungen der Nullstelle mit dem Fluoreszenzermöglichungslicht zu beaufschlagen. Ein Detektor dieses erfindungsgemäßen Rasterfluoreszenzlichtmikroskops ist vorgesehen, um das aus dem Messbereich von der Probe emittierte Fluoreszenzlichts ohne räumliche Auflösung innerhalb des Messbereichs, aber mit zeitlicher Auflösung für die mehreren aufeinander folgenden Winkelstellungen der Nullstelle um das Zentrum zu messen. Basierend auf dieser Messung führt eine Nachführeinrichtung den Messbereich in der Probe dem Partikel derart nach, dass sie den zeitlichen Intensitätsverlauf des über die mehreren Winkelstellungen der linien- oder flächenförmigen Nullstelle hinweg gemessenen Fluoreszenzlichts auf dem vorgegebenen Wert, d. h. einem vorgegebenen Verlauf hält.

Bei beiden erfindungsgemäßen Rasterfluoreszenzlichtmikroskopen kann die Winkeleinstelleinrichtung dazu ausgebildet sein, die mehreren Winkelstellungen der Nullstelle gleichmäßig über einen vollen Kreis- oder Raumwinkel um das Zentrum zu verteilen. Weiterhin kann die Winkeleinstelleinrichtung dazu ausgebildet sein, den Winkel der Nullstelle um das Zentrum des Messbereichs kontinuierlich und/oder in diskreten Schritten zu verändern.

Konkret kann die Winkeleinstelleinrichtung einen Wellenfrontmodulator und mindestens eine Pockelszelle zum Verdrehen einer Polarisationsrichtung des Fluoreszenzverhinderungslichts aufweisen. Die Pockelszelle wird hinter dem Wellenfrontmodulator angeordnet, um die Polarisationsrichtung des aus dem Wellenfrontmodulator austretenden Lichts so zu drehen, dass sie längs eines die Phasenfronten geradlinig halbierenden Phasensprungs um λ/2 verläuft. Dies ist Voraussetzung dafür, dass sich bei der anschließenden Fokussierung des Fluoreszenzverhinderungslichts in die Probe eine durch zwei Intensitätsberge begrenzte linienförmige - oder bei der dreidimensionalen Betrachtung flächenförmige - Nullstelle ergibt. Bei dem Wellenfrontmodulator kann es sich um einen sogenannten Spatial-Light-Modulator handeln. Auch ein Wellenfrontmodulator mit einem biaxialen Kristall, der seinerseits mindestens eine eingangsseitige und eine ausgangsseitige Pockelszelle aufweist, kann verwendet werden. Mit jeweils einer Pockelszelle kann die Polarisationsrichtung von linear polarisiertem Licht grundsätzlich wie gewünscht eingestellt werden, wenn man sie mit einer λ/4-Platte kombiniert. Einen größeren Freiheitsgrad bei der Einstellung der Polarisationsrichtung mit Hilfe von Pockelszellen erhält man, wenn man zwei unter einem 45° Winkel zueinander orientierte Pockelszellen hintereinander schaltet. Dann ist keine zusätzliche λ/4-Platte erforderlich. Statt einer solchen Kombination von zwei Pockelszellen oder einer Pockelszelle mit einer ruhenden λ/4-Platte kann auch eine λ/2-Platte zur Einstellung der Polarisationsrichtung verwendet werden. Diese muss dann jedoch um die Strahlachse drehbar sein. Dabei muss ihre Drehfrequenz mindestens so hoch sein wie die Abtastrate, mit der die Probe abgetastet wird. Ein Wellenfrontmodulator mit einem biaxialen Kristall in Kombination mit Pockelszellen ist aus der Bioaxial-Rasterfluoreszenzlichtmikroskopie grundsätzlich bekannt.

Alternativ zu einem Wellenfrontmodulator, mit dem die Wellenfronten grundsätzlich beliebig moduliert werden können, kann die Winkeleinstelleinrichtung mindestens zwei Teillichtpfade für das Fluoreszenzverhinderungslicht aufweisen, die jeweils ausgebildet sind, um eine der mehreren Winkelstellungen der Nullstelle einzustellen. In jedem dieser Teillichtpfade kann dann beispielsweise eine Phasenverzögerungsplatte vorgesehen sein, die die halbe Wellenfront längs der hierfür passenden Richtung gegenüber der anderen Hälfte der Wellenfront um λ/2 verzögert. Dabei kann das Fluoreszenzverhinderungslicht nacheinander in die verschiedenen Teillichtpfade eingestrahlt werden, oder die verschiedenen Teillichtpfade werden durch optische Delays so aufeinander abgestimmt, dass das Fluoreszenzverhinderungslicht in der Probe nacheinander die verschiedenen Winkelstellungen der Nullstelle ausbildet, wobei die Probe für jede der Winkelstellungen mit dem Fluoreszenzermöglichungslicht beaufschlagt wird.

Beide Ausführungsformen des erfindungsgemäßen Rasterfluoreszenzlichtmikroskops können als einziges lichtempfindliches Element den als Punktdetektor ausgebildeten Detektor aufweisen. Statt des konfokal angeordneten Punktdetektors kann aber auch ein konfokal angeordnetes Sensorarray vorgesehen sein. Grundsätzlich kann das Fluoreszenzlicht aus der Probe auch mit einer konfokal angeordneten Kamera gemessen werden. Bei einem Messbereich mit beugungsbegrenzten Abmessungen löst auch eine solche Kamera beim Messen des Fluoreszenzlichts den Messbereich nicht räumlich auf.

Für das Auswerten des bei dem erfindungsgemäßen Verfahren bzw. mit dem erfindungsgemäßen Rasterfluoreszenzlichtmikroskop gemessenen und den einzelnen Orten des Zentrums des Messbereichs in der Probe zugeordneten Fluoreszenzlichts gibt es neben den bereits angedeuteten auch noch weitere Möglichkeiten.

Die direkteste Methode der Rekonstruktion der mit den Fluoreszenzmarkern markierten Struktur besteht in dem Bilden der bereits angesprochenen Intensitätssumme, d. h. dem Summieren des gemessenen Fluoreszenzlichts über die verschiedenen Winkelstellungen der linienförmigen Nullstelle. Dieses Summieren oder Aufintegrieren kann im Ortsraum oder im Frequenzraum erfolgen und ist ohne Kenntnis über die Punktspreizfunktionen (PSFs) möglich. Allerdings liefert diese Methode durch die Übergewichtung niedriger Frequenzen einen konfokalen Schatten bei der PSF und ist in Bezug auf die erreichbare Auflösung als untere Grenze anzusehen.

Die mit der Intensitätssumme erzielbare Auflösung kann durch ergänzende Maßnahmen gesteigert werden. Beispielsweise können Ihre Summanden im Frequenzraum gewichtet werden. Für diese Methode wird die Optische Transferfunktion (OTF) der Intensitätssumme betrachtet. Dabei wird die oben beschriebene Übergewichtung niedriger Frequenzen anhand einer geeigneten Wichtungsfunktion unterdrückt. Hierdurch verschwindet der konfokale Schatten, allerdings ist eine zumindest grobe Kenntnis der PSFs notwendig.

Sowohl im Frequenzraum als auch im Ortsraum können auch andere Rekonstruktionsmethoden wie beispielsweise die Durchschnitt-, Maximum-, Minimum-Methode angewendet werden. Für die Multifokale-Konfokalmikroskopie werden entsprechende mathematische Vorschriften beschrieben von R. Heintzmann und P.A. Benedetti: High-resolution image reconstruction in fluorescence microscopy with patterned excitation, Appl. Opt., OSA, 2006, 45, 5037-5045

Bei der Maximum Value Methode im Frequenzraum wird jedes im Ortsraum aufgenommene Einzelbild mit eindimensionaler Auflösungserhöhung durch eine linienförmige Nullstelle mit fester Winkelstellung fouriertransformiert. Die resultierenden OTFs zeigen jeweils einen Auflösungsgewinn entlang der Richtung quer zu der Nullstelle. Für jeden Frequenzvektor wird anschließend die OTF bestimmt, die den maximalen Beitrag für diese Frequenz liefert. Dieser maximale Beitrag wird für diese Frequenz zur rekonstruierten OTF hinzugefügt. Eine inverse Fouriertransformation liefert ein Bild im Ortsraum mit zweidimensionaler Auflösungserhöhung. Nachteilig ist hierbei, dass Signal verloren geht, da immer nur die maximalen Beiträge betrachtet werden. Vorteilhaft ist, dass keine Kenntnis über die PSFs erforderlich ist.

Bei der Minimum Value Methode im Ortsraum werden die Daten der unterschiedlichen Musterorientierungen im Ortsraum miteinander verrechnet. Für jeden Ortsvektor wird der Beitrag der Musterorientierung beibehalten, die den minimalen Beitrag liefert. Somit wird nur der "Gleichanteil" betrachtet. Die Vor- und Nachteile verhalten sich analog zur Maximum Value Methode.

Bei einer weiteren Methode wird die interessierende Struktur durch einen Iterationsalgorithmus rekonstruiert. Das Objekt wird mit Hilfe einer Richardson Lucy Entfaltung angenähert. Diese Näherung, die auf einer Maximum Likelihood Methode beruht, wird für Bilder mit unterschiedlichen Winkelstellung der linienförmigen Nullstelle durchgeführt. Anschließend wird über diese Einzelnäherungen gemittelt. Nachteilig ist bei dieser Methode, dass die PSFs zumindest grob bekannt sein müssen. Der große Vorteil besteht darin, dass das gesamte Signal berücksichtigt wird. Anleitungen zur Durchführung dieser Methode finden sich bei W. H. Richardson: Bayesian-Based Iterative Method of Image Restoration, JOSA 62 (1): 55-59, 1972, und bei L. B. Lucy und R. N. Hook: Co-Adding Images with different PSF's, Astronomical Soc Pac, 1992.

Darüber hinaus ist es dann, wenn das Fluoreszenzlicht aus dem Messbereich mit einem Sensorarray gemessen wird, möglich, die Rekonstruktionsmethode mit dem Re-Scan Verfahren oder der ISM zu kombinieren, das u. a. von Stephan Roth et al. beschrieben wird. Gegenüber der herkömmlichen 2D STED Mikroskopie weist das erfindungsgemäße Verfahren bei jedem Messen des Fluoreszenzlichts aus dem Messbereich eine konfokale Achse auf. Entlang dieser konfokalen Richtung kann der Bereich, innerhalb dessen die Raumfrequenzen nicht identisch null sind, gemäß der Re-Scan Methode um ca. einen Faktor zwei erweitert werden. Durch die Rekonstruktion gewinnt man somit zusätzliche Informationen und folglich eine höhere Auflösung. Zum Re-Scan Verfahren siehe Stephan Roth, Colin JR Sheppard, Kai Wicker und Rainer Heintzmann: Optical photon reassignment microscopy (OPRA); Optical Nanoscopy 2013, 2:5; und zur ISM siehe C. B. Müller und J. Enderlein: Image scanning microscopy, Phys Rev Lett,104(198101):1-4, 2010.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: illustriert schematisch ein erfindungsgemäßes Rasterfluoreszenzlichtmikroskop.
- **Fig. 2**: illustriert eine in dem Rasterfluoreszenzlichtmikroskop gemäß Fig. 1 ausgebildete linienförmige Nullstelle in einem Messbereich (a) im Vergleich zu einer punktförmigen Nullstelle in dem Messbereich (b).
- **Fig. 3**: illustriert das Messen eines Messbereichs mit dem erfindungsgemäßen Rasterfluoreszenzlichtmikroskop gemäß Fig. 1 in Bezug auf dabei eingestellte verschiedene Winkelstellungen der Nullstelle gemäß Fig. 2 (a).
- **Fig. 4**: illustriert ein Abbild eines einzelnen Fluoreszenzmarkers aufgenommen mit dem Rasterfluoreszenzlichtmikroskop gemäß Fig. 1 unter Einstellung mehrerer diskreter Winkelstellungen (a) und unter kontinuierlichem Drehen (b) der Nullstelle gemäß Fig. 2 (a).
- **Fig. 5**: illustriert eine erste Ausführungsform einer Winkeleinstelleinrichtung des Rasterfluoreszenzlichtmikroskops gemäß Fig. 1 mit einem Spatial-Light-Modulator (SLM).
- **Fig. 6**: skizziert eine zweite Ausführungsform der Winkeleinstelleinrichtung mit einem biaxialen Kristall.
- **Fig. 7**: skizziert noch eine weitere Ausführungsform der Winkeleinstelleinrichtung mit zwei abschnittsweise voneinander getrennten Teillichtpfaden für Fluoreszenzverhinderungslicht.
- **Fig. 8**: zeigt drei verschiedene Ausführungsformen einer Polarisationsdreheinrichtung, die in jeder der Ausführungsformen der Winkeleinstelleinrichtung gemäß den Fig. 5 und 6 enthalten ist.
- **Fig. 9**: illustriert ein erfindungsgemäßes Verfahren zum mehrdimensional hochauflösenden Abbilden eines Weges eines mit einem Fluoreszenzmarker markierten Partikels in einer Probe; und
- **Fig. 10**: ist ein Auftrag eines Intensitätsverlaufs von Fluoreszenzlicht bei dem in Fig. 9 skizzierten Verfahren.
- **Fig. 11**: illustriert eine Möglichkeit, den bei einer kontinuierlichen Veränderung der Winkelstellung der linienförmigen Nullstelle entstehenden Hof zu unterdrücken.

### FIGURENBESCHREIBUNG

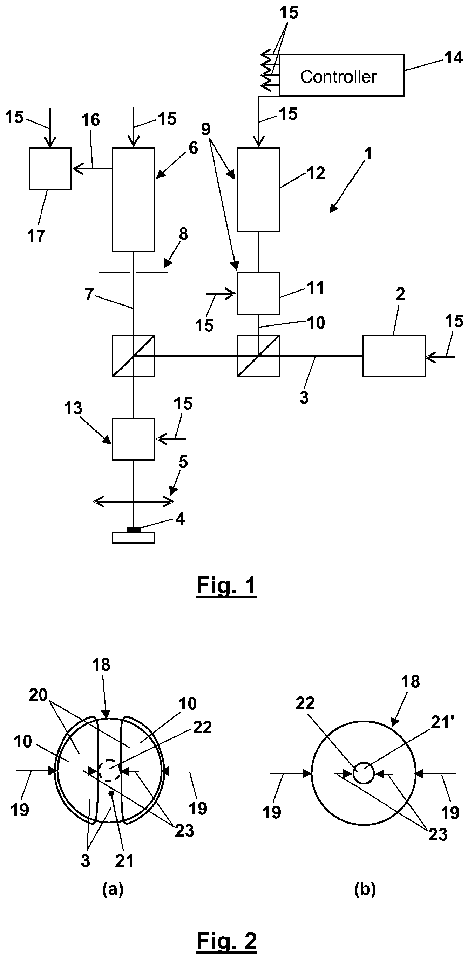

In **Fig. 1** ist stark schematisiert ein Rasterfluoreszenzlichtmikroskop 1 dargestellt. Das Rasterfluoreszenzlichtmikroskop 1 weist eine Fluoreszenzermöglichungslichtquelle 2 in Form eines Pulslasers auf, der Fluoreszenzermöglichungslicht 3 in Pulsen abgibt. Das Fluoreszenzermöglichungslicht 3 regt Fluoreszenzmarker, mit denen eine interessierende Struktur in einer Probe 4 markiert ist, zur Emission von Fluoreszenzlicht 7 an. Das Fluoreszenzermöglichungslicht 3 wird mit einem Objektiv 5 in die Probe fokussiert. Dabei weist der von dem Fluoreszenzermöglichungslicht 3 in der Probe 4 ausgeleuchtete Bereich eine durch die Beugungsgrenze bei der Wellenlänge des Fluoreszenzermöglichungslichts 3 vorgegebene Mindestgröße auf. Dieser ausgeleuchtete Bereich wird hier auch als Messbereich bezeichnet. Ein Detektor 6 ist dazu vorgesehen, um das aus dem Messbereich von der Probe emittierte Fluoreszenzlicht 7 zu messen. Dabei ist der Detektor 6 ein Punktdetektor, der mittels einer Lochblende 8 in konfokaler Anordnung zu dem Brennpunkt des Objektivs 5, um den sich der Messbereich erstreckt, angeordnet ist. Der Detektor 6 misst das aus dem Messbereich emittierte Fluoreszenzlicht ohne räumliche Auflösung innerhalb des Messbereichs. Eine zusätzliche Fluoreszenzverhinderungslichtquelle 9 ist vorgesehen, um Fluoreszenzverhinderungslicht 10 auf die Probe zu richten, mit dem die durch das Fluoreszenzermöglichungslicht 3 angeregten Fluoreszenzmarker in einem Teilbereich des Messbereichs wieder abgeregt werden, so dass sie zu dem von dem Detektor 6 gemessenen Fluoreszenzlicht nicht beitragen können. Konkret regt das Fluoreszenzverhinderungslicht 10 die angeregten Fluoreszenzmarker durch stimulierte Emission wieder ab. Der Teilbereich des Messbereichs, in dem diese Abregung erfolgt, lässt dabei eine linienförmige Nullstelle des Fluoreszenzverhinderungslichts 10 in der Probe aus, die mit einer Winkeleinstelleinrichtung 11 der Fluoreszenzverhinderungslichtquelle 9 ausgebildet und nacheinander in verschiedene Winkelstellungen bezüglich eines Zentrums des Messbereichs ausgerichtet wird. Das Fluoreszenzverhinderungslicht 10 stammt von einem Pulslaser 12. Eine Abtasteinrichtung 13, bei der es sich um einen sogenannten Beamscanner handeln kann, tastet die Probe 4 mit dem Messbereich ab, und zwar in kleinen Schritten von der halben minimalen Abmessung der linienförmigen Nullstelle über das Zentrum des Messbereichs hinweg. Dabei wird mit dem Detektor 6 zu jedem Messbereich, d. h. für jede Lage des Zentrums des Messbereichs in der Probe 4, das Fluoreszenzlicht 7 für die mit der Winkeleinstelleinrichtung 11 eingestellten verschiedenen Winkelstellungen der linienförmigen Nullstelle gemessen, wobei die Probe 4 in jeder der Winkelstellungen mit Fluoreszenzermöglichungslicht 3 von der Fluoreszenzermöglichungslichtquelle 2 beaufschlagt wird. Zur Koordination der Fluoreszenzermöglichungslichtquelle 2, des Pulslasers 12 und der Winkeleinstelleinrichtung 11 der Fluoreszenzverhinderungslichtquelle 9, des Detektors 6 sowie der Abtasteinrichtung 13 ist eine Steuerung 14 vorgesehen, die auf die genannten Einrichtungen über Steuer- oder Triggersignale 15 einwirkt. Auf diese Weise wird ein Ausgangssignal 16 des Detektors 6, das einem Speicher 17 zugeführt wird, welcher ebenfalls ein Steuersignal 15 von der Steuerung 14 erhält, so abgespeichert, dass es der zugehörigen Position des Zentrums des Messbereichs in der Probe 4 zugeordnet wird. Dies kann über einen bestimmten Speicherplatz oder eine zusammen mit dem Ausgangssignal 16 abgespeicherte Codierung der Position geschehen. Das Ausgangssignal 16 des Detektors 6 umfasst hier zusätzlich eine Intensitätssumme, die der Detektor 6 über mehrere Winkelstellungen der Nullstelle um das festliegende Zentrum des Messbereichs aufsummiert. Zu dieser Intensitätssumme kann das gesamte Fluoreszenzlicht 7 aus dem Messbereich aufsummiert werden oder nur ein Anteil davon, beispielsweise sein Gleichanteil, der sich über die verschiedenen Winkelstellungen der linienförmigen Nullstelle hinweg nicht verändert und damit stärker dem Zentrum des Messbereichs zugeordnet werden kann als bspw. ein variabler Anteil des Fluoreszenzlichts 7.

**Fig. 2 (a)** illustriert einen kreisförmigen Messbereich 18 des Rasterfluoreszenzlichtmikroskops 1 gemäß Fig. 1. Der Messbereich 18 weist einen Durchmesser 19 auf. Über den gesamten Messbereich 18 hinweg wird die Probe 4 gemäß Fig. 1 mit dem Fluoreszenzermöglichungslicht 3 von der Fluoreszenzermöglichungslichtquelle 2 beaufschlagt. Ein zweigeteilter Teilbereich 20 des Messbereichs 18, in dem der Messbereich 18 mit dem Fluoreszenzverhinderungslicht 10 von der Fluoreszenzverhinderungslichtquelle 9 beaufschlagt wird, lässt hingegen die linienförmige Nullstelle 21, die sich über das Zentrum 22 des Messbereichs 18 hinweg erstreckt, aus. Die minimale Abmessung 23 der Nullstelle über das Zentrum 22 hinweg ist im vorliegenden Beispiel so dargestellt, dass sie 1/5 des Durchmessers 19 des Messbereichs 18 in derselben Richtung entspricht. Durch das Fluoreszenzverhinderungslicht 10 wird der Messbereich 18 demnach in einer Richtung auf 1/5 seiner beugungsbegrenzten Abmessungen reduziert.

Dadurch geht auch die Intensität des noch aus dem Messbereich 18 erhältlichen Fluoreszenzlichts 7, das nur aus dem Bereich der Nullstelle 21 stammen kann, auf etwa 1/5 zurück.

**Fig. 2 (b)** zeigt im Vergleich eine punktförmige Nullstelle 21' mit derselben minimalen Abmessung 23 über das Zentrum 22 gegenüber dem Durchmesser 19. Das heißt auch hier beträgt das Verhältnis der Abmessung 23 zu dem Durchmesser 19 1:5. Durch die punktförmige Nullstelle 21' ist der Messbereich 18 zweidimensional eingeschränkt, und das aus ihm dann noch erhältliche Fluoreszenzlicht 7 weist eine auf etwa 1/k² reduzierte Intensität auf. Dies bedeutet umgekehrt, dass für das Messen einer signifikanten Menge an Fluoreszenzlicht aus der Nullstelle 21' k-mal so viel Zeit benötigt wird, wie für das Messen einer signifikanten Menge an Fluoreszenzlicht aus der Nullstelle 21 gemäß Fig. 2 (a). Dieser Geschwindigkeitsvorteil der linienförmigen Nullstelle 21 bleibt selbst dann erhalten, wenn an jedem Messpunkt verschiedene Winkelstellungen der Nullstelle 21 gemäß Fig. 2 (a) eingestellt werden, konkret solange diese Anzahl der Winkelstellungen der Nullstelle 21 signifikant kleiner als k bleibt. Hinzu kommt, dass die Lichtleistung des Fluoreszenzverhinderungslichts 10 zur Ausbildung der Nullstelle 21 gemäß Fig. 2 (a) im Vergleich zu der für die Ausbildung der Nullstelle 21' gemäß Fig. 2 (b) benötigten Lichtleistung des Fluoreszenzverhinderungslichts 10 nur halb so groß ist. Das heißt, der Pulslaser 12 gemäß Fig. 1 kann von geringerer Leistung sein und ist entsprechend kostengünstiger, oder mit demselben Pulslaser 12 kann ein größerer Faktor k, d. h. eine höhere Ortsauflösung erreicht werden. Die geringere Lichtleistung für denselben Faktor k bedeutet auch, dass die Gefahr eines Bleichens der Fluoreszenzmarker durch die in den Messbereich 18 eingestrahlten Lichtintensitäten reduziert ist.

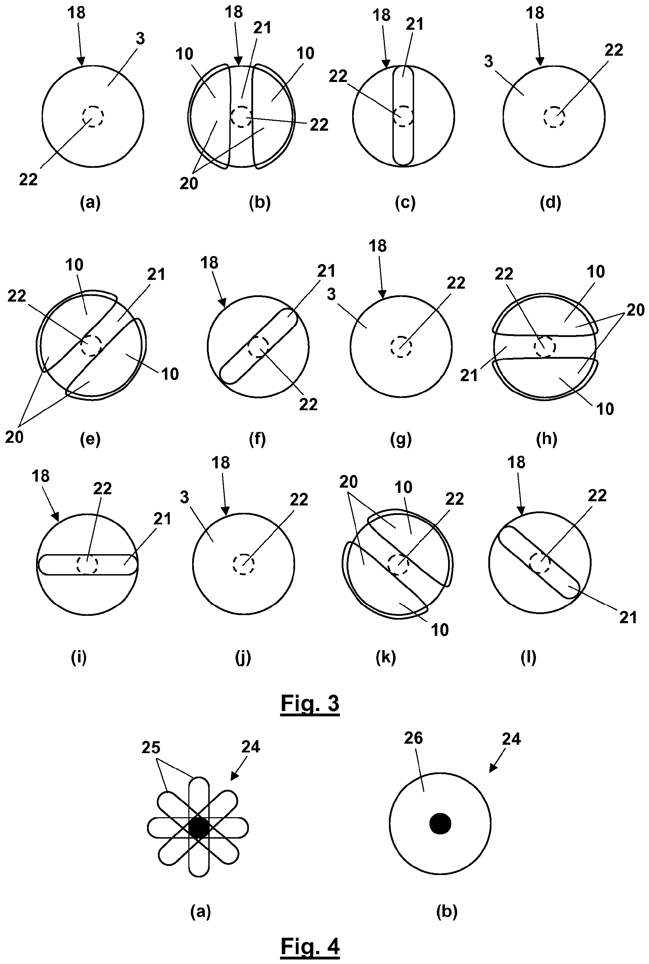

**Fig. 3** illustriert eine Abfolge von Schritten für einen Messbereich 18 des Rasterfluoreszenzlichtmikroskops 1 gemäß Fig. 1, die durchgeführt werden, bevor ein anderer Messbereich mit Hilfe der Abtasteinrichtung 13 angesteuert wird. Im Schritt (a) wird der Messbereich 18 mit dem Fluoreszenzermöglichungslicht 3 beaufschlagt. Im Schritt (b) wird der Messbereich 18 dann in dem Teilbereich 20 mit dem Fluoreszenzverhinderungslicht 10 beaufschlagt, wobei die linienförmige Nullstelle 21 ausgelassen wird. Im Schritt (c) wird das aus der Nullstelle 21 heraus emittierte Fluoreszenzlicht mit dem Detektor 6 gemessen. Die Schritte (d), (e) und (f) entsprechen den Schritten (a), (b) und (c) für eine andere Winkelstellung der Nullstelle 21, die gegenüber der Winkelstellung in den Schritten (b) und (c) um 45° versetzt ist. Dasselbe gilt für die Schritte (g) bis (i) und (j) bis (l), wobei die Nullstelle 21 jeweils um weitere 45° um das Zentrum 22 verdreht wird. Über alle Schritte (a) bis (l) hinweg ist damit der Kreiswinkel um die Nullstelle 21 gleichmäßig mit vier Winkelstellungen der Nullstelle 21 abgedeckt. Dabei kann für jede der Winkelstellungen der Nullstelle 21 eine signifikante Menge an Fluoreszenzlicht von der Probe gemessen werden. Damit sind dann auch Auswertungen des Fluoreszenzlichts zu den einzelnen Winkelstellungen der Nullstelle 21 möglich.

**Fig. 4 (a)** zeigt ein Abbild 24 eines einzelnen Fluoreszenzmarkers in Form der beim Abtasten der den Fluoreszenzmarker enthaltenden Probe 4 über die für jeden Messbereich 18 aufsummierten Intensitätssummen des Fluoreszenzlichts 7 aus der Probe 4. Durch die linienförmige Ausdehnung der Nullstelle 21 wird Fluoreszenzlicht 7 von dem Fluoreszenzmarker nicht nur für den Messbereich 18 gemessen, dessen Zentrum 22 auf den Fluoreszenzmarker fällt, sondern auch für benachbarte Messbereiche. Dabei spiegeln Schweife 25 des Abbilds 24 die Orientierung und Erstreckung der Nullstelle 21 in dem Messbereich 18 wider.

**Fig. 4 (b)** zeigt im Vergleich das Abbild 24 eines Fluoreszenzmarkers, das unter kontinuierlicher Veränderung der Winkellage der Nullstelle 21 für jeden Messbereich 18 mit dem Rasterfluoreszenzlichtmikroskop 1 gemäß Fig. 1 aufgenommen wurde. Hier liegt ein Hof 26 ohne räumliche Vorzugsrichtung um den Punkt herum verteilt, an dem der Messbereich mit seinem Zentrum 22 den Fluoreszenzmarker trifft.

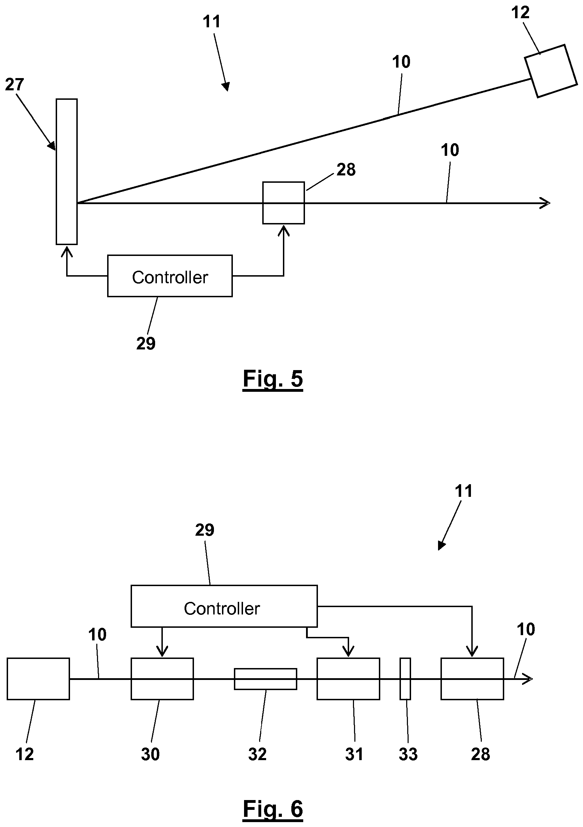

**Fig. 5** illustriert eine Ausführungsform der Winkeleinstelleinrichtung 11 mit einem Spatial-Light-Modulator (SLM) 27. Linear polarisiertes Fluoreszenzverhinderungslicht 10 trifft auf den SLM. Der SLM moduliert die Phasenfronten des Fluoreszenzverhinderungslichts 10 so, dass sie auf einer Seite der optischen Achse gegenüber der anderen um λ/2, wobei λ die Wellenlänge des Fluoreszenzverhinderungslichts ist, verzögert sind. Eine Dreheinrichtung 28 dreht anschließend die Polarisationsrichtung des Fluoreszenzverhinderungslichts 10 so, dass sie parallel zu der Grenze zwischen dem Phasensprung, d. h. der Grenze zwischen den beiden um λ/2 zueinander verzögerten Teilbereichen der Wellenfronten verläuft. Dies ist Voraussetzung dafür, dass beim anschließenden Fokussieren des Fluoreszenzverhinderungslichts 10 mit dem Objektiv 5 die linienförmige Nullstelle 21 ausgebildet wird. Eine Steuerung 29 steuert den SLM 27 und die Dreheinrichtung 28 abgestimmt aufeinander an.

Bei der Ausführungsform der Winkeleinstelleinrichtung 11 gemäß Fig. 6 sind weitere Dreheinrichtungen 30 und 31 vorgesehen. Die im Strahlengang erste Dreheinrichtung 30 dreht die Polarisationsrichtung des einfallenden linear polarisierten Fluoreszenzverhinderungslichts 10 so, dass ein biaxialer Kristall 32 unter Ausnutzung der sogenannten konischen Brechung (conical diffraction) und in Verbindung mit einer weiteren Dreheinrichtung 31 und einem Analysator 33 die Wellenfronten in der erforderlichen Weise moduliert, um die linienförmige Nullstelle 21 mit der jeweils gewünschten Winkelstellung ausbilden zu können. Die Dreheinrichtung 28 orientiert die Polarisationsrichtung anschließend wieder so, dass die Nullstelle 21 beim Fokussieren des Fluoreszenzverhinderungslichts 10 tatsächlich ausgebildet wird.

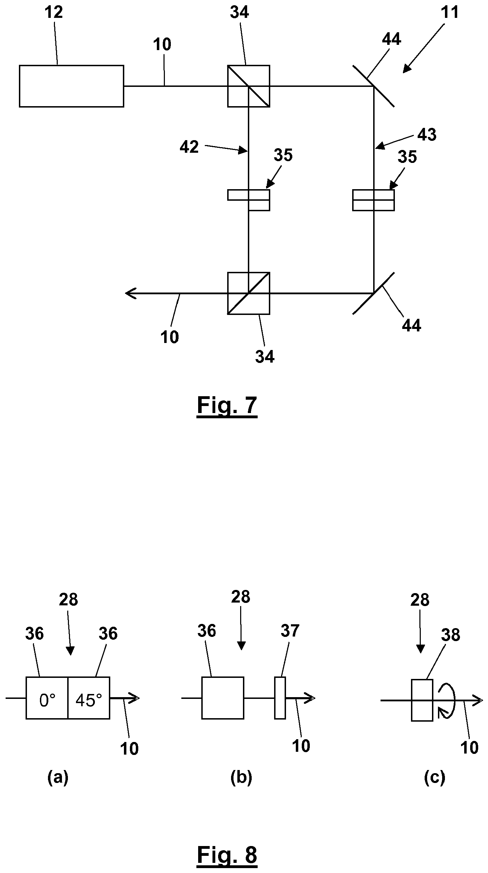

Bei der Ausführungsform der Winkeleinstelleinrichtung 11 gemäß Fig. 7 wird das einfallende Fluoreszenzverhinderungslicht 10 mit einem Polarisationsstrahlteiler 34 in zwei Teilstrahlen auf unterschiedlichen Teillichtpfaden 42, 43 aufgeteilt, in denen gleiche Phasenplatten 35, aber mit unterschiedlicher Orientierung um die Strahlachse angeordnet sind. Die beiden Teilstrahlen werden dann mit einem weiteren Polarisationsstrahlteiler 34 wieder zusammengeführt. Dabei sind die Teillichtpfade 42 und 43 der Teilstrahlen so unterschiedlich lang, dass das über den längeren Teillichtpfad 43 laufende Fluoreszenzverhinderungslicht 10 um den halben Kehrwert der Pulsfrequenz des Pulslasers 12 gegenüber dem Fluoreszenzverhinderungslicht 10 verzögert ist, das über den kürzeren Teillichtpfad 42 läuft. Dazu kann in dem Teillichtpfad ein hier nicht dargestelltes optisch Delay angeordnet sein. Das aus der Winkeleinstelleinrichtung 11 austretende Fluoreszenzverhinderungslicht 10 weist somit die doppelte Pulsfrequenz wie das eintretende Fluoreszenzverhinderungslicht 10 auf, wobei das austretende Fluoreszenzverhinderungslicht 10 wechselweise aus Pulsen besteht, die die Nullstelle 21 mit um 90° versetzten Winkelstellungen ausbilden. Um alle vier Winkelstellungen gemäß Fig. 3 auszubilden, muss das einfallende Fluoreszenzverhinderungslicht 10 auf vier Teilstrahlen aufgespalten werden. Alternativ zum Auspalten des mit nur einem Pulslaser 12 bereitgestellten Fluoreszenzverhinderungslichts 10 können auch mehrere synchronisierte Pulslaser 12 verwendet werden. Die Ausführungsform der Winkeleinstelleinrichtung 11 gemäß Fig. 7 kommt ohne eine Dreheinrichtung 28 aus.

**Fig. 8** zeigt schematisch verschiedene Ausführungsformen einer Dreheinrichtung 28. Die Dreheinrichtungen 30 und 31 gemäß Fig. 6 können entsprechend ausgebildet sein. Gemäß **Fig. 8 (a)** besteht die Dreheinrichtung 28 aus zwei unter einem Winkel von 45° zueinander orientierten Pockelszellen 36. Gemäß **Fig. 8 (b)** ist eine Pockelszelle 36 mit einer fest montierten λ/4-Platte 37 kombiniert. Dies reicht grundsätzlich aus, um die Polarisationsrichtung in eine Wunschrichtung zu drehen. **Fig. 8 (c)** zeigt eine drehbar gelagerte λ/2-Platte 38 als Dreheinrichtung 28. Der Drehwinkel der λ/2-Platte 38 um die optische Achse muss immer so eingestellt werden, dass die resultierende Drehung der Polarisationsrichtung gerade die gewünschte Polarisationsrichtung ergibt. Bei den Ausführungsformen gemäß Fig. 8 (a) und (b) wird dies durch die Ansteuerung der Pockelszellen 36 erreicht.

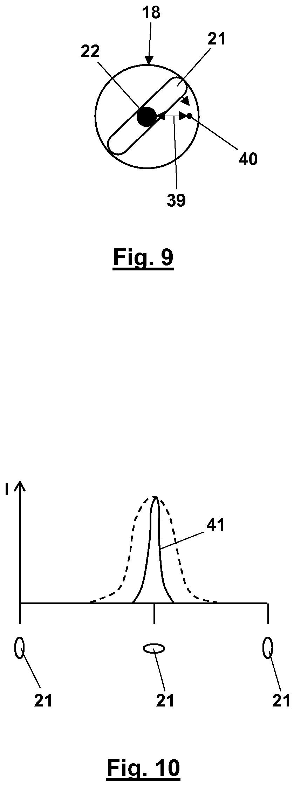

**Fig. 9** illustriert einen Offset 39 zwischen einem mit einem Fluoreszenzmarker markierten Partikel 40 beim erfindungsgemäßen Verfolgen eines Wegs des Partikels 40 in einer Probe. Dieser Offset 39 liegt zwischen dem Zentrum 22 des Messbereichs 18 und dem Partikel 40 bzw. einem Fluoreszenzmarker vor. Wenn dieser Offset 39 konstant ist, ergibt sich über die verschiedenen Winkelstellungen der Nullstelle 21 hinweg ein in **Fig. 10** mit durchgezogener Linie gezeigter gewünschter Verlauf 41 der Intensität I des Fluoreszenzlichts aus dem Messbereich 18. Verringert sich der Offset 19, wird der Intensitätsverlauf 41 breiter, was in Fig. 10 mit gestrichelter Linie angedeutet ist; vergrößert sich der Offset 39, wird der Intensitätsverlauf 41 schmaler. Bei sich ändernder Orientierung des Offsets 39 ist die Phasenlage des Verlaufs 41 zu den in Fig. 10 wiedergegebenen Winkelstellungen der Nullstelle 21 eine andere. Indem der Messbereich 18 mit der Abtasteinrichtung 13 gemäß Fig. 1 dem Partikel 40 immer so nachgeführt wird, dass sich der Intensitätsverlauf 41 bezüglich seiner Form und seiner Phasenlage nicht verändert, wird mit dem Zentrum 22 der Weg des Partikels 40 mit räumlicher Hochauflösung nachverfolgt, wobei der Offset 39 zu berücksichtigen ist.

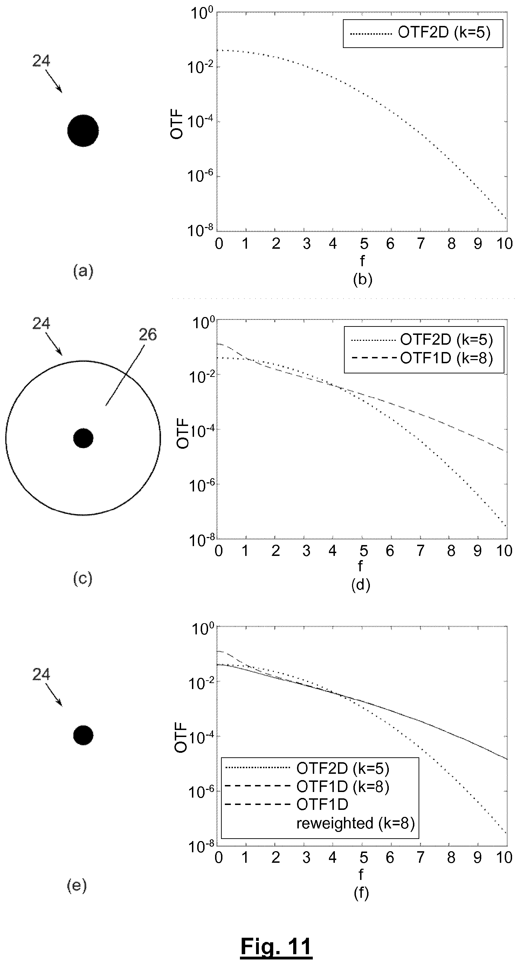

**Fig. 11 (a)** illustriert eine Abbildung mit punktförmiger Nullstelle der Intensitätsverteilung des Fluoreszenzverhinderungslichts. Dabei beträgt der Faktor der Auflösungserhöhung k=5 gegenüber herkömmlicher konfokaler Rasterfluoreszenzlichtmikroskopie. Der radiale Abfall (entlang der Raumfrequenz) der korrespondierenden optischen Transferfunktion (OTF) ist in **Fig. 11 (b)** als gepunktete Linie dargestellt und als OTF2D (k=5) bezeichnet.

**Fig. 11 (c)** illustriert schematisch eine Abbildung mit gleicher Lichtleistung, gleicher Gesamtaufnahmezeit wie in Fig. 11 (a), aber mit einer rotierenden linienförmigen Nullstelle. In diesem Fall liefert eine Einzelaufnahme in Richtung der minimalen Abmessung der Nullstelle eine Abbildung mit höherer Auflösungserhöhung mit k=8 im Vergleich zu herkömmlicher konfokaler Rasterfluoreszenzlichtmikroskopie. Das Bilden der Intensitätssumme der Einzelbilder resultiert in einer ebenfalls stärkeren hochaufgelösten Abbildung im Zentrum des Messbereichs. Jedoch führt die starke Gewichtung niedriger Frequenzen zur Ausbildung eines Hofs. Die aus der Intensitätssumme resultierende OTF ist in **Fig. 11 (d)** als gestrichelte Linie dargestellt und als OTF1D (k=8) bezeichnet. Die stärkere Gewichtung niedriger Frequenzen im Bereich f<1 gegenüber der Abbildung mit punktförmiger Intensitätsnullstelle ist im Vergleich zu der gepunkteten Linie (OTF2D (k=5)) ersichtlich. Des Weiteren werden auch hohe Frequenzen im Bereich f>4 bei dem Verfahren mit linienförmiger Nullstelle stärker übertragen, was in einem zusätzlichen Signal- und Auflösungsgewinn der resultierenden Abbildung resultiert. Eine gezielte Unterdrückung dieser Frequenzen, die zur Ausbildung des Hofes führen, liefert eine Abbildung ohne Hof gemäß **Fig. 11 (e)****.** Die entsprechende Gewichtung der OTF wird anhand **Fig. 11 (f)** verdeutlicht. Die ursprünglich ermittelte Intensitätssumme (gestrichelte Linie, OTF1 D (k=8)) wird an eine geeignete Wichtungsfunktion (durchgezogene Linie, OTF1D reweighted (k=8)) angeglichen. Für niedrige Frequenzen im Bereich f<2 gibt es folglich einen Signalübertrag, der maximal dem der Methode mit punktförmiger Nullstelle (gepunktete linie, OTF 2D (k=5)) entspricht. Für höhere Frequenzen im Bereich f>2 wird die OTF der Intensitätssumme (OTF1D (k=8)) nicht moduliert und der oben beschriebene Signal- und Auflösungsgewinn wird nicht beeinträchtigt.

### BEZUGSZEICHENLISTE

- 1: Rasterfluoreszenzlichtmikroskop
- 2: Fluoreszenzermöglichungslichtquelle
- 3: Fluoreszenzermöglichungslicht
- 4: Probe
- 5: Objektiv
- 6: Detektor
- 7: Fluoreszenzlicht
- 8: Lochblende
- 9: Fluoreszenzverhinderungslichtquelle
- 10: Fluoreszenzverhinderungslicht
- 11: Winkeleinstelleinrichtung
- 12: Pulslaser
- 13: Abtasteinrichtung
- 14: Steuerung
- 15: Steuer-/Triggersignal
- 16: Ausgangssignal
- 17: Speicher
- 18: Messbereich
- 19: Durchmesser
- 20: Teilbereich
- 21: Nullstelle
- 22: Zentrum
- 23: Abmessung
- 24: Abbild
- 25: Schweif
- 26: Hof
- 27: Spatial-Light-Modulator (SLM)
- 28: Dreheinrichtung
- 29: Steuerung
- 30: Dreheinrichtung
- 31: Dreheinrichtung
- 32: biaxialer Kristall
- 33: Analysator
- 34: Polarisationsstrahlteiler
- 35: Phasenplatte
- 36: Pockelszelle
- 37: λ/4-Platte
- 38: λ/2-Platte
- 39: Offset
- 40: Partikel
- 41: Intensitätsverlauf
- 42: Teillichtpfad
- 43: Teillichtpfad
- 44: Spiegel
- I: Intensität

## Patentansprüche

1. Verfahren zum mehrdimensional hochauflösenden Abbilden einer mit Fluoreszenzmarkern markierten Struktur einer Probe (4), mit den für eine Vielzahl von Messbereichen (18) in der Probe (4) wiederholten Schritten:
- Fokussieren des Fluoreszenzermöglichungslichts (3) in die Probe (4), wobei der von dem Fluoreszenzermöglichungslicht (3) in der Probe (4) ausgeleuchtete Bereich der jeweilige Messbereich (18) ist;
- Beaufschlagen eines Teilbereichs (20) des Messbereichs (18) mit Fluoreszenzverhinderungslicht (10), wobei der Teilbereich (20) ein Zentrum (22) des Messbereichs (18) auslässt, indem eine Intensitätsverteilung des Fluoreszenzverhinderungslichts (10) eine sich über das Zentrum (22) hinweg ersteckende linien- oder flächenförmige Nullstelle (21) aufweist, wobei eine minimale Erstreckung (23) der Nullstelle (21) durch das Zentrum (22) des Messbereichs (18) um einen Faktor k ≥ 2 kleiner ist als ein Durchmesser (19) des Messbereichs (18) in derselben Richtung;
- Messen von aus dem Messbereich (18) von der Probe (4) emittiertem Fluoreszenzlicht (7) ohne räumliche Auflösung innerhalb des Messbereichs (18);
- Zuordnen eines Werts des gemessenen Fluoreszenzlichts (7) zu einem durch die Lage des Zentrums (22) in der Probe (4) definierten Ort;
**dadurch gekennzeichnet,**
- **dass** das aus dem Messbereich (18) emittierte Fluoreszenzlicht (7) für mehrere aufeinander folgende unterschiedliche Winkelstellungen der Nullstelle (21) um das Zentrum (22) gemessen wird, wobei für jede der Winkelstellungen der Nullstelle (21) der Messbereich (18) mit dem Fluoreszenzermöglichungslicht (3) beaufschlagt wird und wobei das aus dem Messbereich (18) von der Probe (4) emittierte Fluoreszenzlicht (7) mit einer zeitlichen Auflösung gemessen wird, die die mehreren aufeinander folgenden Winkelstellungen der Nullstelle (21) bei dem gemessenen Fluoreszenzlicht (7) auflöst.

2. Verfahren nach Anspruch 1, **dadurch gekennzeichnet, dass** eine Intensitätssumme, zu der zumindest ein Anteil des aus dem Messbereich (18) emittierten Fluoreszenzlichts (7) über die mehreren Winkelstellungen der Nullstelle (21) hinweg aufsummiert wird, als der Wert des gemessenen Fluoreszenzlichts (7) dem durch die Lage des Zentrums (22) in der Probe (4) definierten Ort zugeordnet wird, wobei optional
- das gesamte aus dem Messbereich (18) emittierte Fluoreszenzlicht (7) oder
- ein Gleichanteil des aus dem Messbereich (18) emittierten Fluoreszenzlichts (7) über die mehreren Winkelstellungen der Nullstelle (21) hinweg zu der Intensitätssumme aufsummiert wird.

3. Verfahren nach einem der vorhergehenden Ansprüche, **dadurch gekennzeichnet, dass** die Messbereiche (18) in Richtung der Winkelstellungen der Nullstelle (21), in denen das Fluoreszenzlicht (7) seine höchste Intensität aufweist, aneinander gereiht werden.

4. Verfahren nach einem der vorhergehenden Ansprüche, **dadurch gekennzeichnet,**
- **dass** die mehreren Winkelstellungen der Nullstelle (21) über einen vollen Kreis- oder Raumwinkel um das Zentrum (22) gleichmäßig verteilt werden und/oder
- **dass** die Zahl der Winkelstellungen der Nullstelle (21) mindestens πk/2 beträgt und optional nicht mehr als πk/2 + 1 beträgt oder ein Winkel der Nullstelle (21) um das Zentrum (22) des Messbereichs (18) während des Messens des Fluoreszenzlichts (7) kontinuierlich geändert wird.

5. Verfahren nach einem der vorhergehenden Ansprüche, **dadurch gekennzeichnet, dass** die Messbereiche (18) der Vielzahl der Messbereiche (18) in zwei oder drei Raumrichtungen in einem Rastermaß von weniger als der minimalen Erstreckung der Nullstelle (21) angeordnet sind.

6. Verfahren nach einem der vorhergehenden Ansprüche, **dadurch gekennzeichnet, dass** die Schritte des Beaufschlagens und Messens direkt nacheinander für einander nicht überlappende Messbereiche (18) ausgeführt werden.

7. Verfahren nach einem der vorhergehenden Ansprüche, **dadurch gekennzeichnet, dass** ein aus den Intensitätssummen zusammengesetztes primäres Abbild der Struktur bezüglich enthaltener Raumfrequenzen hochpassgefiltert wird.

8. Verfahren zum mehrdimensional hochauflösenden Abbilden eines Wegs eines mit einem Fluoreszenzmarker markierten Partikels (40) in einer Probe (4), mit den für eine Vielzahl von Messbereichen (18) in der Probe (4) wiederholten Schritten:
- Fokussieren des Fluoreszenzermöglichungslichts (3) in die Probe (4), wobei der von dem Fluoreszenzermöglichungslicht (3) in der Probe (4) ausgeleuchtete Bereich der jeweilige Messbereich (18) ist;
- Beaufschlagen eines Teilbereichs (20) des Messbereichs (18) mit Fluoreszenzverhinderungslicht (10), wobei der Teilbereich (20) ein Zentrum (22) des Messbereichs (18) auslässt, indem eine Intensitätsverteilung des Fluoreszenzverhinderungslichts (10) eine sich über das Zentrum (22) hinweg ersteckende linien- oder flächenförmige Nullstelle (21) aufweist, wobei eine minimale Erstreckung der Nullstelle (21) durch das Zentrum (22) des Messbereichs (18) um einen Faktor k ≥ 2 kleiner ist als ein Durchmesser (19) des Messbereichs (18) in derselben Richtung;
- Messen von aus dem Messbereich (18) von der Probe (4) emittiertem Fluoreszenzlicht (7) ohne räumliche Auflösung innerhalb des Messbereichs (18); und
- Nachführen des Messbereichs (18) in der Probe (4), um einen Wert des gemessenen Fluoreszenzlichts (7) auf einem vorgegebenen Wert zu halten;
**dadurch gekennzeichnet,**
- **dass** das aus dem Messbereich (18) emittierte Fluoreszenzlicht (7) für mehrere aufeinander folgende unterschiedliche Winkelstellungen der linien- oder flächenförmigen Nullstelle (21) um das Zentrum (22) mit zeitlicher Auflösung gemessen wird, wobei die zeitliche Auflösung die mehreren aufeinander folgenden Winkelstellungen der Nullstelle (21) bei dem gemessenen Fluoreszenzlicht (7) auflöst und wobei für jede der Winkelstellungen der Nullstelle (21) der Messbereich (18) mit dem Fluoreszenzermöglichungslicht (3) beaufschlagt wird, und
- **dass** der einzuhaltende Wert des gemessenen Fluoreszenzlichts (7) ein zeitlicher Intensitätsverlauf des über die mehreren Winkelstellungen der linien- oder flächenförmigen Nullstelle (21) hinweg gemessenen Fluoreszenzlichts (7) ist.

9. Verfahren nach einem der vorhergehenden Ansprüche, **dadurch gekennzeichnet, dass** das aus dem Messbereich (18) von der Probe (4) emittierte Fluoreszenzlicht (7) konfokal zu dem in die Probe (4) fokussierten Fluoreszenzermöglichungslicht (3) gemessen wird, optional mit einem Punktdetektor oder einem Sensorarray, der/das konfokal zu dem Messbereich angeordnet wird.

10. Rasterfluoreszenzlichtmikroskop (1) zur Durchführung des Verfahrens nach einem der Ansprüche 1 bis 7, mit
- einer Fluoreszenzermöglichungslichtquelle (2), die zum Beaufschlagen des Messbereichs (18) mit dem Fluoreszenzermöglichungslicht (3) ausgebildet ist, wobei das Fluoreszenzermöglichungslicht (3) in die Probe (4) fokussiert wird und wobei der von dem Fluoreszenzermöglichungslicht (3) in der Probe (4) ausgeleuchtete Bereich der Messbereich (18) ist;
- einer Fluoreszenzverhinderungslichtquelle (9), die zum Beaufschlagen des Teilbereichs (20) des Messbereichs (18) mit dem Fluoreszenzverhinderungslicht (10) ausgebildet ist, wobei der Teilbereich (20) das Zentrum (22) des Messbereichs (18) auslässt, indem die Intensitätsverteilung des Fluoreszenzverhinderungslichts (10) die sich über das Zentrum (22) hinweg ersteckende linien- oder flächenförmige Nullstelle (21) aufweist, wobei die minimale Erstreckung der Nullstelle (21) durch das Zentrum (22) des Messbereichs (18) um den Faktor k ≥ 2 kleiner ist als die Erstreckung des Messbereichs (18) in derselben Richtung,
- einem Detektor (6), der zum Messen des aus dem Messbereich (18) von der Probe (4) emittiertem Fluoreszenzlichts (7) ohne räumliche Auflösung innerhalb des Messbereichs (18) ausgebildet ist;
- einer Codiereinrichtung, die zum Zuordnen des Werts des gemessenen Fluoreszenzlichts (7) zu dem durch die Lage des Zentrums (22) in der Probe (4) definierten Ort ausgebildet ist; und
- einer Abtasteinrichtung (13), die zum Abtasten eines interessierenden räumlichen Bereichs der Probe (4) mit dem Zentrum (22) des Messbereichs (18) ausgebildet ist,
**dadurch gekennzeichnet,**
- **dass** die Fluoreszenzverhinderungslichtquelle (9) eine Winkeleinstelleinrichtung (11) aufweist, die dazu ausgebildet ist, die mehreren aufeinander folgenden Winkelstellungen der Nullstelle (21) um das Zentrum (22) einzustellen, wobei die Fluoreszenzermöglichungslichtquelle (2) dazu ausgebildet ist, den Messbereich (18) für jede der Winkelstellungen der Nullstelle (21) mit dem Fluoreszenzermöglichungslicht (3) zu beaufschlagen, und
- **dass** der Detektor (6) dazu ausgebildet ist, das aus dem Messbereich (18) emittierte Fluoreszenzlicht (7) für die mehreren aufeinander folgenden Winkelstellungen der Nullstelle (21) um das Zentrum (22) mit einer zeitlichen Auflösung derart zu messen, das die mehreren aufeinander folgenden Winkelstellungen der Nullstelle (21) bei dem gemessenen Fluoreszenzlicht (7) auflöst werden.

11. Rasterfluoreszenzlichtmikroskop (1) nach Anspruch 10, **dadurch gekennzeichnet, dass** der Detektor (6) dazu ausgebildet ist, zumindest einen Anteil des aus dem Messbereich (18) emittierten Fluoreszenzlichts (7) über die mehreren Winkelstellungen der Nullstelle (21) hinweg zu der Intensitätssumme aufzusummieren, wobei die Codiereinrichtung dazu ausgebildet ist, die Intensitätssumme als den Wert des gemessenen Fluoreszenzlichts (7) dem durch die Lage des Zentrums (22) in der Probe (4) definierten Ort zuzuordnen und wobei der Detektor (6) optional dazu ausgebildet ist,
- das gesamte aus dem Messbereich (18) emittierte Fluoreszenzlicht (7) oder
- einen Gleichanteil des aus dem Messbereich (18) emittierten Fluoreszenzlichts (7) über die mehreren Winkelstellungen der Nullstelle (21) hinweg zu der Intensitätssumme aufzusummieren.

12. Rasterfluoreszenzlichtmikroskop (1) nach Anspruch 10 oder 11, **dadurch gekennzeichnet, dass** die Abtasteinrichtung (13) einen Trackingmodus aufweist, in dem sie die Messbereiche (18) in Richtung der Winkelstellungen der Nullstelle (21), in denen das Fluoreszenzlicht (7) seine höchste Intensität aufweist, aneinander reiht.

13. Rasterfluoreszenzlichtmikroskop (1) zur Durchführung des Verfahrens nach Anspruch 8 oder 9, mit
- einer Fluoreszenzermöglichungslichtquelle (2), die zum Beaufschlagen des Messbereichs (18) mit dem Fluoreszenzermöglichungslicht (3) ausgebildet ist, wobei das Fluoreszenzermöglichungslicht (3) in die Probe (4) fokussiert wird und wobei der von dem Fluoreszenzermöglichungslicht (3) in der Probe (4) ausgeleuchtete Bereich der Messbereich (18) ist;
- einer Fluoreszenzverhinderungslichtquelle (9), die zum Beaufschlagen des Teilbereichs (20) des Messbereichs (18) mit dem Fluoreszenzverhinderungslicht (10) ausgebildet ist, wobei der Teilbereich (20) das Zentrum (22) des Messbereichs (18) auslässt, indem die Intensitätsverteilung des Fluoreszenzverhinderungslichts (10) die sich über das Zentrum (22) hinweg ersteckende linien- oder flächenförmige Nullstelle (21) aufweist, wobei die minimale Erstreckung (23) der Nullstelle (21) durch das Zentrum (22) des Messbereichs (18) um den Faktor k ≥ 2 kleiner ist als der Durchmesser (19) des Messbereichs (18) in derselben Richtung,
- einem Detektor (6), der zum Messen des aus dem Messbereich (18) von der Probe (4) emittiertem Fluoreszenzlichts (7) ohne räumliche Auflösung innerhalb des Messbereichs (18) ausgebildet ist; und
- einer Nachführeinrichtung, die zum derartigen Nachführen des Messbereichs (18) in der Probe (4) ausgebildet ist, dass sie den Wert des gemessenen Fluoreszenzlichts (7) auf dem vorgegebenen Wert hält,
**dadurch gekennzeichnet,**
- **dass** die Fluoreszenzverhinderungslichtquelle (9) eine Winkeleinstelleinrichtung (11) aufweist, die dazu ausgebildet ist, die mehreren aufeinander folgenden Winkelstellungen der Nullstelle (21) um das Zentrum (22) einzustellen, wobei die Fluoreszenzermöglichungslichtquelle (2) dazu ausgebildet ist, den Messbereich (18) für jede der Winkelstellungen der Nullstelle (21) mit dem Fluoreszenzermöglichungslicht (3) zu beaufschlagen,
- **dass** der Detektor (6) dazu ausgebildet ist, das aus dem Messbereich (18) emittierte Fluoreszenzlicht (7) für die mehreren aufeinander folgenden Winkelstellungen der Nullstelle (21) um das Zentrum (22) mit zeitlicher Auflösung zu messen, und
- **dass** die Nachführeinrichtung den Messbereichs (18) in der Probe (4) derart nachführt, dass sie den zeitlichen Intensitätsverlauf des über die mehreren Winkelstellungen der linienoder flächenförmigen Nullstelle (21) hinweg gemessenen Fluoreszenzlichts (7) auf dem vorgegebenen Wert hält.

14. Rasterfluoreszenzlichtmikroskop (1) nach einem der Ansprüche 10 bis 13, **dadurch gekennzeichnet, dass** der Detektor (6) als einziges lichtempfindliches Element einen konfokal zu dem Messbereich (18) angeordneten Punktdetektor oder ein konfokal zu dem Messbereich (18) angeordnetes Sensorarray aufweist.

15. Rasterfluoreszenzlichtmikroskop (1) nach einem der Ansprüche 10 bis 14, **dadurch gekennzeichnet,**
- **dass** die Winkeleinstelleinrichtung (11) dazu ausgebildet ist,
- die mehreren Winkelstellungen der Nullstelle (21) gleichmäßig über einen vollen Kreis- oder Raumwinkel um das Zentrum (22) zu verteilen und/oder
- den Winkel der Nullstelle (21) um das Zentrum (22) des Messbereichs (18) kontinuierlich und/oder in diskreten Schritten zu verändern und/oder
- **dass** die Winkeleinstelleinrichtung (11)
- einen Wellenfrontmodulator mit einem biaxialen Kristall (32) oder einen Spatial-Light Modulator (27) umfasst, dem mindestens eine Pockelszelle (36) nachgeschaltet ist, und/oder
- mindestens zwei abschnittsweise voneinander getrennte Teillichtpfade (42, 43) für das Fluoreszenzverhinderungslicht (10) aufweist, die jeweils ausgebildet sind, um eine der mehreren Winkelstellungen der Nullstelle (21) einzustellen.

## Claims

1. Method of multi-dimensional high-resolution imaging a structure of a sample (4), which is marked with fluorescence markers, comprising the steps which are repeated for a plurality of measurement areas (18) in the sample (4):
- focusing the fluorescence enabling light (3) into the sample (4), wherein the area illuminated by the fluorescence enabling light (3) in the sample (4) is the respective measurement area (18);
- subjecting a partial area (20) of the measurement area (18) to fluorescence inhibiting light (10), wherein the partial area (20) omits a centre (22) of the measurement area (18) in that an intensity distribution of the fluorescence inhibiting light (10) comprises a line-shaped or plane-shaped zero (21) extending across the centre (22), wherein a minimal extension (23) of the zero (21) through the centre (22) of the measurement area (18) is by a factor k ≥ 2 smaller than a diameter (19) of the measurement area (18) in the same direction;
- measuring fluorescence light (7) emitted from the sample (4) out of the measurement area (18) without spatial resolution within the measurement area (18);
- assigning a value of the measured fluorescence light (7) to a location defined by the position of the centre (22) in the sample (4);
**characterized in**
- **that** the fluorescence light (7) emitted out of the measurement area (18) is measured for a plurality of consecutive different angle positions of the zero (21) about the centre (22), wherein, for each of the angle positions of the zero (21), the measurement area (18) is subjected to the fluorescence enabling light (3), and wherein the fluorescence light (17) emitted from the sample (4) out of the measurement area (18) is measured at a temporal resolution which resolves the plurality of consecutive angle position of the zero (21) in the measured fluorescence light (7).

2. Method of claim 1, **characterised in that** an intensity sum which is calculated by adding up at least a part of the fluorescence light (7) emitted out the measurement area (18) over the different angle position of the zero (21), is assigned to the location defined by the position of the centre (22) in the sample (4) as the value of the measured fluorescence light (7), wherein optionally
- the entire fluorescence light (7) emitted out of the measurement area (18), or
- a direct component of the fluorescence light (7) emitted out of the measurement area (18) is added up over the plurality of angle positions of the zero (21) to calculate the intensity sum.

3. Method of any of the preceding claims, **characterized in that** the measurement areas (18) are lined up in direction of the angle positions of the zero (21) in which the fluorescence light (7) has its highest intensity.

4. Method of any of the preceding claims, **characterized in**
- **that** the plurality of angle positions of the zero (21) are uniformly distributed over a full circle or solid angle about the centre (22), and/or
- **that** the number of the angle positions of the zero (21) is at least πk/2 and optionally not more than πk/2+1, or an angle of the zero (21) about the centre (22) of the measurement area (18) is continuously varied while measuring the fluorescence light (7).

5. Method of any of the preceding claims, **characterized in that** the measurement area (18) of the plurality of measurement areas (18) are arranged in two or three spatial dimensions at a spacing of less than the minimal extension of the zero (21).

6. Method of any of the preceding claims, **characterized in that** the steps of subjecting and measuring are executed directly one after the other for measurement areas (18) which do not overlap.

7. Method of any of the preceding claims, **characterized in that** a primary image of the structure which is composed of the intensity sums is high-pass filtered with regard to included spatial frequencies.

8. Method of multi-dimensional high-resolution imaging of a path of a particle (40) which is marked with a fluorescence marker in a sample (4), comprising the steps which are repeated for a plurality of measurement areas (18) in the sample (4):
- focusing the fluorescence enabling light (3) into the sample (4), wherein the area illuminated by the fluorescence enabling light (3) in the sample (4) is the respective measurement area (18);
- subjecting a partial area (20) of the measurement area (18) to fluorescence inhibiting light (10), wherein the partial area (20) omits a centre (22) of the measurement area (18) in that an intensity distribution of the fluorescence inhibiting light (10) comprises a line-shaped or plane-shaped zero (21) extending across the centre (22), wherein a minimal extension (23) of the zero (21) through the centre (22) of the measurement area (18) is by a factor k ≥ 2 smaller than a diameter (19) of the measurement area (18) in the same direction;
- measuring fluorescence light (7) emitted from the sample (4) out of the measurement area (18) without spatial resolution within the measurement area (18); and
- updating the measurement area (18) in the sample (4) in order to keep a value of the measured fluorescence light (7) at a predetermined value;
**characterized in**
- **that** the fluorescence light (7) emitted out of the measurement area (18) is measured for a plurality of consecutive different angle positions of the zero (21) about the centre (22) at a temporal resolution which resolves the plurality of consecutive angle position of the zero (21) in the measured fluorescence light (7), and wherein, for each of the angle positions of the zero (21), the measurement area (18) is subjected to the fluorescence enabling light (3), and
- **that** the value of the measured fluorescence light (7) to be kept is a temporal course of intensities of the fluorescence light (7) measured over the plurality of angle positions of the line-shaped or plane-shaped zero.

9. Method of any of the preceding claims, **characterized in that** the fluorescence light (7) emitted from the sample (4) out of the measurement area (18) is measured confocally with respect to the fluorescence enabling light (3) focused into the sample (4), optionally by means of a point detector or a sensor array, which is arranged confocally with respect to the measurement area.

10. Scanning fluorescence light microscope (1) for carrying out the method of any of the claims 1 to 7, comprising
- a fluorescence enabling light source (2) which is configured for subjecting the measurement area (18) to the fluorescence enabling light (3), wherein the fluorescence enabling light (3) is focused into the sample (4), and wherein the area illuminated by the fluorescence enabling light (3) in the sample (4) is the measurement area (18);
- a fluorescence inhibiting light source (9) which is configured for subjecting the partial area (20) of the measurement area (18) to the fluorescence inhibiting light (10), wherein the partial area (20) omits the centre (22) of the measurement area (18) in that the intensity distribution of the fluorescence inhibiting light (10) comprises the line-shaped or plane-shaped zero (21) extending across the centre (22), wherein the minimal extension of the zero (21) through the centre (22) of the measurement area (18) is by a factor k ≥ 2 smaller than the extension of the measurement area (18) in the same direction,
- a detector (6) which is configured for measuring the fluorescence light (7) emitted from the sample (4) out of the measurement area (18) without spatial resolution within the measurement area (18);
- a coding device which is configured for assigning the value of the measured fluorescence light (7) to the location defined by the position of the centre (22) in the sample (4); and
- a scanning device (13) which is configured for scanning a spatial area of interest of the sample (4) with the centre (22) of the measurement area (18),
**characterized in**
- **that** the fluorescence inhibiting light source (9) has an angle adjusting device (11) which is configured for adjusting the plurality of consecutive angle positions of the zero (21) about the centre (22), wherein the fluorescence enabling light source (2) is configured for subjecting the measurement area (18) for each of the angle positions of the zero (21) to the fluorescence enabling light (3), and
- **that** the detector (6) is configured for measuring the fluorescence light (7) emitted out of the measurement area (18) for the plurality of consecutive angle positions of the zero (21) about the centre (22) at a spatial resolution in such a way that the plurality of consecutive angle positions of the zero (21) are resolved in the measured fluorescence light (7).

11. Scanning fluorescence light microscope (1) of claim 10, **characterized in that** the detector (6) is configured for adding up at least a part of the fluorescence light (7) emitted out of the measurement area (18) over the different angle positions of the zero (21) to calculate the intensity sum, wherein the coding device is configured for assigning the intensity sum to the location defined by the position of the centre (22) in the sample (4) as the value of the measured fluorescence light (7), and wherein the detector (6) is optionally configured for adding up
- the entire fluorescence light (7) emitted out of the measurement area (18) or
- a direct component of the fluorescence light (7) emitted out of the measurement area (18) over the plurality of angle positions of the zero (21) to calculate the intensity sum.

12. Scanning fluorescence light microscope (1) of claim 10 or 11, **characterized in that** the scanning device (13) has a tracking mode in which the measurement areas (18) are lined up in direction of the angle positions of the zero (21) in which the fluorescence light (7) has its highest intensity.

13. Scanning fluorescence microscope (1) for carrying out the method of claim 8 or 9, comprising
- a fluorescence enabling light source (2) which is configured for subjecting the measurement area (18) to the fluorescence enabling light (3), wherein the fluorescence enabling light (3) is focused into the sample (4), and wherein the area illuminated by the fluorescence enabling light (3) in the sample (4) is the measurement area (18);
- a fluorescence inhibiting light source (9) which is configured for subjecting the partial area (20) of the measurement area (18) to the fluorescence inhibiting light (10), wherein the partial area (20) omits the centre (22) of the measurement area (18) in that the intensity distribution of the fluorescence inhibiting light (10) comprises the line-shaped or plane-shaped zero (21) extending across the centre (22), wherein the minimal extension of the zero (21) through the centre (22) of the measurement area (18) is by a factor k ≥ 2 smaller than the extension of the measurement area (18) in the same direction,
- a detector (6) which is configured for measuring the fluorescence light (7) emitted from the sample (4) out of the measurement area (18) without spatial resolution within the measurement area (18); and
- an updating device which is configured for updating the measurement area (18) in the sample (4) in such a way that it keeps the value of the measured fluorescence light (7) at the predetermined value,
**characterized in**
- **that** the fluorescence inhibiting light source (9) has an angle adjusting device (11) which is configured for adjusting the plurality of consecutive angle positions of the zero (21) about the centre (22), wherein the fluorescence enabling light source (2) is configured for subjecting the measurement area (18) for each of the angle positions of the zero (21) to the fluorescence enabling light (3), and
- **that** the detector (6) is configured for measuring the fluorescence light (7) emitted out of the measurement area (18) for the plurality of consecutive angle positions of the zero (21) about the centre (22) at a spatial resolution, and
- **that** the updating device updates the measurement area (18) in the sample (4) such that it keeps the temporal course of intensities of the fluorescence light (7) measured over the plurality of angle positions of the line-shaped or plane-shaped zero (21) at the predetermined value.

14. Scanning fluorescence light microscope (1) of any of the claims 10 to 13, **characterized in that** the detector (6) has a point detector confocally arranged with respect to the measurement area (18) or a sensor array confocally arranged with respect to the measurement area (18) as its only light sensitive element.

15. Scanning fluorescence light microscope (1) of any of the claims 10 to 14, **characterized in,**
- **that** the angle adjusting device (11) is configured for
- distributing the plurality of angle positions of the zero (21) uniformly over a full circle or solid angle about the centre (22) and/or
- varying the angle of the zero (21) about the centre (22) of the measurement area (18) continuously and/or in discreet steps, and/or
- **that** the angle adjusting device (11)
- includes a wave front modulator with a biaxial crystal (32) or a spatial light modulator (27) with at least one Pockels cell (36) arranged downstream, and/or
- comprises at least two partial light paths (42, 43) for the fluorescence inhibition light (10) which are section-wise separated from each other and which are configured for adjusting one of the plurality of angle positions of the zero (21).

## Revendications

1. Procédé pour l'imagerie multidimensionnelle à haute résolution d'une structure, marquée avec des marqueurs fluorescents, d'un échantillon (4), avec les étapes suivantes, répétées pour une pluralité de zones de mesure (18) dans l'échantillon (4) :
- focalisation de la lumière d'excitation de la fluorescence (3) dans l'échantillon (4), dans lequel la zone éclairée dans l'échantillon (4) par la lumière d'excitation de la fluorescence (3) est la zone de mesure (18) correspondante ;
- sollicitation d'une partie (20) de la zone de mesure (18) avec une lumière d'inhibition de la fluorescence (10), dans lequel la partie (20) exclut un centre (22) de la zone de mesure (18), grâce au fait qu'une répartition de l'intensité de la lumière d'inhibition de la fluorescence (10) présente un zéro (21) formant une ligne ou une surface s'étendant au-delà du centre (22), dans lequel une extension minimale (23) du zéro (21) à travers le centre (22) de la zone de mesure (18) est inférieure d'un facteur k ≥ 2 à un diamètre (19) de la zone de mesure (18) dans la même direction ;
- mesure de la lumière fluorescente (7) émise par l'échantillon (4) à partir de la zone de mesure (18), sans résolution spatiale à l'intérieur de la zone de mesure (18) ;
- attribution d'une valeur de la lumière fluorescente (7) mesurée à un lieu défini par la position du centre (22) dans l'échantillon (4) ;
**caractérisé en ce que**
- la lumière fluorescente (7) émise à partir de la zone de mesure (18) est mesurée pour plusieurs positions angulaires successives du zéro (21) autour du centre (22), dans lequel, pour chaque position angulaire du zéro (21), la zone de mesure (18) est sollicitée avec la lumière d'excitation de la fluorescence (3) et dans lequel la lumière fluorescente (7) émise par l'échantillon (4) à partir de la zone de mesure (18) est mesurée avec une résolution temporelle qui résout les plusieurs positions angulaires successives du zéro (21) pour la lumière fluorescente (7) mesurée.

2. Procédé selon la revendication 1, **caractérisé en ce qu'**une somme d'intensités, dans laquelle au moins une part de la lumière fluorescente (7) émise à partir de la zone de mesure (18) est additionnée pour les plusieurs positions angulaires du zéro (21), est attribuée, en tant que valeur de la lumière fluorescente (7) mesurée, au lieu défini par la position du centre (22) dans l'échantillon (4), dans lequel, en option,
- l'ensemble de la lumière fluorescente (7) émise à partir de la zone de mesure (18) ou
- une part égale de la lumière fluorescente (7) émise à partir de la zone de mesure (18) pour les plusieurs positions angulaires du zéro (21) est additionnée afin d'obtenir une somme d'intensités.

3. Procédé selon l'une des revendications précédentes, **caractérisé en ce que** les zones de mesure (18) sont juxtaposées dans la direction des positions angulaires du zéro (21) au niveau desquelles la lumière fluorescente (7) présente son intensité la plus élevée.

4. Procédé selon l'une des revendications précédentes, **caractérisé en ce que**
- les plusieurs positions angulaires du zéro (21) sont réparties uniformément sur un angle circulaire ou spatial entier autour du centre (22) et/ou
- le nombre de positions angulaires du zéro (21) est d'au moins πk/2 et, en option, n'est pas supérieur à πk/2 + 1 ou un angle du zéro (21) autour du centre (22) de la zone de mesure (18) est modifié de manière continue pendant la mesure de la lumière fluorescente (7).

5. Procédé selon l'une des revendications précédentes, **caractérisé en ce que** les zones de mesure (18) de la pluralité de zones de mesure (18) sont disposées dans deux ou trois directions de l'espace à des dimensions modulaires inférieures à l'extension minimale du zéro (21).

6. Procédé selon l'une des revendications précédentes, **caractérisé en ce que** les étapes de sollicitation et de mesure sont exécutée directement les unes après les autres pour des zones de mesures (18) qui ne se chevauchent pas entre elles.

7. Procédé selon l'une des revendications précédentes, **caractérisé en ce qu'**une représentation primaire de la structure, constituée des sommes d'intensités, est filtré à l'aide d'un filtre passe-haut par rapport aux fréquences spatiales contenues.

8. Procédé d'imagerie multidimensionnelle à haute résolution d'un chemin d'une particule (40) marquée avec un marqueur fluorescent dans un échantillon (4), avec les étapes suivantes, répétées pour une pluralité de zones de mesure (18) dans l'échantillon (4) :
- focalisation de la lumière d'excitation de la fluorescence (3) dans l'échantillon (4), dans lequel la zone éclairée dans l'échantillon (4) par la lumière d'excitation de la fluorescence (3) est la zone de mesure (18) correspondante ;
- sollicitation d'une partie (20) de la zone de mesure (18) avec une lumière d'inhibition de la fluorescence (10), dans lequel la partie (20) exclut un centre (22) de la zone de mesure (18), grâce au fait qu'une répartition de l'intensité de la lumière d'inhibition de la fluorescence (10) présente un zéro (21) formant une ligne ou une surface s'étendant au-delà du centre (22), dans lequel une extension minimale du zéro (21) à travers le centre (22) de la zone de mesure (18) est inférieure d'un facteur k ≥ 2 à un diamètre (19) de la zone de mesure (18) dans la même direction ;
- mesure de la lumière fluorescente (7) émise par l'échantillon (4) à partir de la zone de mesure (18), sans résolution spatiale à l'intérieur de la zone de mesure (18) ; et
- suivi de la zone de mesure (18) dans l'échantillon (4), afin de maintenir une valeur de la lumière fluorescente (7) mesurée à une valeur prédéterminée ;
**caractérisé en ce que**
- la lumière fluorescente (7) émise à partir de la zone de mesure (18) est mesurée avec une résolution temporelle pour plusieurs positions angulaires successives du zéro (21) autour du centre (22), dans lequel la résolution temporelle résout les plusieurs positions angulaires successives du zéro (21) pour la lumière fluorescente (7) mesurée et dans lequel, pour chaque position angulaire du zéro (21), la zone de mesure (18) est sollicitée avec la lumière d'excitation de la fluorescence (3) et
- la valeur à respecter de la lumière fluorescente (7) mesurée est un tracé d'intensité temporel de la lumière fluorescente (7) mesurée au niveau des plusieurs positions angulaires du zéro (21) en forme de ligne ou de surface.

9. Procédé selon l'une des revendications précédentes, **caractérisé en ce que** la lumière fluorescente (7) émise par l'échantillon (4) à partir de la zone de mesure (18) est mesurée de manière confocale par rapport à la lumière d'excitation de la fluorescence (3) focalisée dans l'échantillon (4), en option avec un détecteur ponctuel ou une matrice de capteurs qui est disposé de manière confocale par rapport à la zone de mesure.

10. Microscope à lumière fluorescente à balayage (1) pour l'exécution du procédé selon l'une des revendications 1 à 7, avec
- une source de lumière d'excitation de la fluorescence (2), qui est conçue pour la sollicitation de la zone de mesure (18) avec la lumière d'excitation de la fluorescence (3), dans lequel la lumière d'excitation de la fluorescence (3) est focalisée dans l'échantillon (4) et dans lequel la zone éclairée par la lumière d'excitation de la fluorescence (3) dans l'échantillon (4) est la zone de mesure (18) ;
- une source de lumière d'inhibition de la fluorescence (9), qui est conçue pour la sollicitation de la partie (20) de la zone de mesure (18) avec la lumière d'inhibition de la fluorescence (10), dans lequel la partie (20) exclut le centre (22) de la zone de mesure (18), grâce au fait qu'une répartition de l'intensité de la lumière d'inhibition de la fluorescence (10) présente un zéro (21) formant une ligne ou une surface s'étendant au-delà du centre (22), dans lequel l'extension minimale du zéro (21) à travers le centre (22) de la zone de mesure (18) est inférieure d'un facteur k ≥ 2 à un diamètre de la zone de mesure (18) dans la même direction,
- un détecteur (6) qui est conçu pour la mesure de la lumière fluorescente (7) émise par l'échantillon (4) à partir de la zone de mesure (18) sans résolution spatiale à l'intérieur de la zone de mesure (18) ;
- un dispositif de codage qui est conçu pour l'attribution de la valeur de la lumière fluorescente (7) mesurée au lieu défini par la position du centre (22) dans l'échantillon (4) ; et
- un dispositif de balayage (13) qui est conçu pour le balayage d'une zone spatiale intéressante de l'échantillon (4) avec le centre (22) de la zone de mesure (18), **caractérisé en ce que**
- la source de lumière d'inhibition de la fluorescence (9) comprend un dispositif de réglage angulaire (11) qui est conçu pour régler les plusieurs positions angulaires successives du zéro (21) autour du centre (22), dans lequel la source de lumière d'excitation de la fluorescence (2) est conçue pour solliciter la zone de mesure (18) pour chacune des positions angulaires du zéro (21) avec la lumière d'excitation de la fluorescence (3) et
- le détecteur (6) est conçu pour mesurer la lumière fluorescente (7) émise à partir de la zone de mesure (18) pour les plusieurs positions angulaires successives du zéro (21) autour du centre (22) avec une résolution temporelle, de façon à ce que les plusieurs positions angulaires successives du zéro (21) soient résolues pour la lumière fluorescente (7) mesurée.

11. Microscope à lumière fluorescente à balayage (1) selon la revendication 10, **caractérisé en ce que** le détecteur (6) est conçu pour additionner au moins une part de la lumière fluorescente (7) émise à partir de la zone de mesure (18) pour les plusieurs positions angulaires (21) afin d'obtenir la somme d'intensités, dans lequel le dispositif de codage est conçu pour attribuer la somme d'intensités, en tant que valeur de la lumière fluorescente (7) mesurée, au lieu défini par la position du centre (22) dans l'échantillon (4) et dans lequel le détecteur (6) est, en option, conçu pour
- additionner l'ensemble de la lumière fluorescente (7) émise à partir de la zone de mesure (18) ou
- additionner une part égale de la lumière fluorescente (7) émise à partir de la zone de mesure (18)
pour les plusieurs positions angulaires (21) afin d'obtenir la somme d'intensités.

12. Microscope à lumière fluorescente à balayage (1) selon la revendication 10 ou 11, **caractérisé en ce que** le dispositif de balayage (13) présente un mode de suivi dans lequel il juxtapose les zones de mesure (18) en direction des positions angulaires du zéro (21), dans lesquelles la lumière fluorescente (7) présente son intensité la plus élevée.

13. Microscope à lumière fluorescente à balayage (1) pour l'exécution du procédé selon la revendication 8 ou 9, avec
- une source de lumière d'excitation de la fluorescence (2), qui est conçue pour la sollicitation de la zone de mesure (18) avec la lumière d'excitation de la fluorescence (3), dans lequel la lumière d'excitation de la fluorescence (3) est focalisée dans l'échantillon (4) et dans lequel la zone éclairée par la lumière d'excitation de la fluorescence (3) dans l'échantillon (4) est la zone de mesure (18) ;
- une source de lumière d'inhibition de la fluorescence (9), qui est conçue pour la sollicitation de la partie (20) de la zone de mesure (18) avec la lumière d'inhibition de la fluorescence (10), dans lequel la partie (20) exclut le centre (22) de la zone de mesure (18), grâce au fait que la répartition de l'intensité de la lumière d'inhibition de la fluorescence (10) présente un zéro (21) formant une ligne ou une surface s'étendant au-delà du centre (22), dans lequel l'extension minimale (23) du zéro (21) à travers le centre (22) de la zone de mesure (18) est inférieure d'un facteur k ≥ 2 à un diamètre (19) de la zone de mesure (18) dans la même direction,
- un détecteur (6) qui est conçu pour la mesure de la lumière fluorescente (7) émise par l'échantillon (4) à partir de la zone de mesure (18) sans résolution spatiale à l'intérieur de la zone de mesure (18) ; et
- un dispositif de poursuite qui est conçu pour suivre la zone de mesure (18) dans l'échantillon (4) de façon à ce qu'il maintienne la valeur de la lumière fluorescente (7) mesurée à la valeur prédéterminée,
**caractérisé en ce que**
- la source de lumière d'inhibition de la fluorescence (9) comprend un dispositif de réglage angulaire (11) qui est conçu pour régler les plusieurs positions angulaires successives du zéro (21) autour du centre (22), dans lequel la source de lumière d'excitation de la fluorescence (2) est conçue pour solliciter la zone de mesure (18) pour chacune des positions angulaires du zéro (21) avec la lumière d'excitation de la fluorescence (3),
- le détecteur (6) est conçu pour mesurer la lumière fluorescente (7) émise à partir de la zone de mesure (18) pour les plusieurs positions angulaires successives du zéro (21) autour du centre (22) avec une résolution temporelle et
- le dispositif de poursuite suit la zone de mesure (18) dans l'échantillon (4) de façon à ce qu'il maintienne le tracé d"intensité temporel de la lumière fluorescente (7) mesurée pour les plusieurs positions angulaires du zéro (21) en forme de ligne ou de surface à la valeur prédéterminée.

14. Microscope à lumière fluorescente à balayage (1) selon l'une des revendications 10 à 13, **caractérisé en ce que** le détecteur (6) comprend, en tant que seul élément photosensible, un détecteur ponctuel disposé de manière confocale par rapport à la zone de mesure (18) ou une matrice de capteurs disposée de manière confocale par rapport à la zone de mesure (18).

15. Microscope à lumière fluorescente à balayage (1) selon l'une des revendications 10 à 14, **caractérisé en ce que**
- le dispositif de réglage angulaire (11) est conçu pour
- répartir les plusieurs positions angulaires du zéro (21) uniformément sur un angle circulaire ou spatial entier autour du centre (22) et/ou
- modifier l'angle du zéro (21) autour du centre (22) de la zone de mesure (18) de manière continue et/ou par pas discrets et/ou
- le dispositif de réglage angulaire (11) comprend
- un modulateur de front d'onde avec un cristal biaxial (32) ou un Spatial Light Modulator (27), en aval duquel est branchée au moins une cellule de Pockels (36) et/ou
- au moins deux chemins lumineux partiels (42, 43), séparés entre eux à certains endroits, pour la lumière d'inhibition de la fluorescence (10), qui sont conçus chacun pour régler une des plusieurs positions angulaires du zéro (21).
